# EUROPÄISCHE PATENTSCHRIFT

(11) **EP 2 517 814 B1**
(45) Veröffentlichungstag und Bekanntmachung des Hinweises auf die Patenterteilung: **03.12.2014**
(21) Anmeldenummer: 12160060.5
(22) Anmeldetag: 19.03.2012
(51) Int. Cl.: B23B 51/04, B23B 45/00, B28D 1/04, B28D 1/14

(54) **Bohrmaschine, insbesondere handgeführte Kernbohrmaschine**
Drilling machine, in particular hand-held core drilling machine
Perceuse, en particulier perceuse de trépannage manuelle

(30) Priorität: 28.04.2011 DE 102011100278
(43) Veröffentlichungstag der Anmeldung: 31.10.2012
(73) Patentinhaber: C. & E. Fein GmbH, 73529 Schwäbisch Gmünd-Bargau (DE)
(72) Erfinder: Richt, Boris, 71282 Hemmingen (DE); Eisenhardt, Armin, 72406 Bisingen (DE)
(74) Vertreter: Witte, Weller & Partner Patentanwälte mbB

(56) Entgegenhaltungen:
- CH-A- 312 072
- DE-A1-102009 040 513
- US-A- 2 345 403

## Beschreibung

Die Erfindung betrifft eine Bohrmaschine, insbesondere eine handgeführte Kernbohrmaschine, eine Bohrmaschinen-Werkzeug-Kombination und eine Verwendung einer solchen Bohrmaschine.

Kernbohren ist allgemein bekannt. Beim Kernbohren zerspant ein Kernbohrer, auch als Bohrkrone bezeichnet, eine im Wesentlichen ringförmige Nut um einen Bohrkern eines zu bearbeitenden Werkstoffs. Insbesondere bei großen Bohrdurchmessern und Bohrtiefen ist das Kernbohren besonders produktiv, da nicht der gesamte Bohrungsquerschnitt zerspant werden muss. Kernbohren findet im Allgemeinen breite Anwendung im Bauwesen, etwa beim Bohren von Durchbrüchen in Mauerwerk, Beton oder Gestein.

Aus der US 2,345,403 A, die den Oberbegriff des Anspruchs 1 offenbart, ist eine Bohrmaschine mit einem Pilotbohrer und einer lösbaren Bohrkrone bekannt, wobei ferner ein Getriebe vorgesehen ist, das dazu ausgebildet ist, den Pilotbohrer und die Bohrkrone in entgegengesetzten Richtungen rotatorisch anzutreiben.

Zum Bohren insbesondere großer Kernlöcher werden Kernbohrgeräte oder Kernbohrmaschinen üblicherweise mit einem Stativ oder Gestell gekoppelt, das am Werkstück festgelegt wird. Ein solches Bohrstativ soll eine hinreichende Führung beim Bohrvorgang gewährleisten und kann darüber hinaus mit manuell oder motorisch antreibbaren Vorschubantrieben versehen sein. Daneben können die Bohrstative ein beim Bohren entstehendes Gegenmoment aufnehmen bzw. abstützen, dass dem Antriebsmoment entgegengerichtet ist. Somit kann ein Bediener deutlich entlastet werden, die Gefahr von Verklemmungen des Kernbohrers lässt sich deutlich reduzieren.

Nachteilig bei stativgebundenen Kernbohrmaschinen ist der hohe Zeitbedarf zur Befestigung und zum Ausrichten des Stativs. So können etwa Stative am Mauerwerk mit einer Mehrzahl von Schraubverbindungen festgelegt werden müssen, die wiederum von Hand vorgebohrt werden müssen.

Zum Bohren von Kernlöchern, insbesondere von Kernlöchern mit verhältnismäßig kleinen Durchmessern, können Kernbohrgeräte ferner von Hand geführt bzw. von Hand gehalten werden. Zur Verbesserung der Führung beim Bohrvorgang können dabei Werkzeuge vorgesehen sein, bei denen die Bohrkrone zum Bohren des Bohrkerns mit einem Zentrierbohrer zum Bohren einer Zentrierbohrung bzw. Pilotbohrung gekoppelt ist. Dabei ist der Zentrierbohrer üblicherweise gegenüber einer Kernbohrkrone in Richtung auf ein zu bearbeitendes Werkstück versetzt, so dass seine Spitze zu Beginn des Bohrvorgangs alleine in das Werkstück eindringen kann, ohne dass es zu einem wesentlichem Eingriff der Bohrkrone mit dem Werkstück kommt. Der Durchmesser des Zentrierbohrers ist dabei kleiner als der Durchmesser der Bohrkrone. Auf diese Weise werden zwar zwei zueinander konzentrische Bohrungen in das Werkstück eingebracht, der Zentrierbohrvorgang wird aber zur Verbesserung der Führung beim handgeführten Kernbohren in Kauf genommen.

Eine Kernbohrmaschine ist etwa aus der DE 10 2009 040 513 A1 bekannt. Dabei handelt es sich um eine Kernbohrmaschine mit einer Hohlbohrwelle, die mit einer Antriebseinheit in Rotation versetzt werden kann. Die Kernbohrmaschine ist ferner zur Aufnahme einer Bohrkrone und eines Zentrierbohrers ausgebildet. Es hat sich gegezeigt, dass der Zentrierbohrer die Führung der Kernbohrmaschine beim Bohren einer Kernbohrung mit der Bohrkrone verbessern kann.

Auch bei der Metallbearbeitung wird das Kernbohren genutzt. Da jedoch Kernbohrungen in Metall üblicherweise mit höherer Genauigkeit als etwa Kernbohrungen in Mauerwerk erfolgen müssen, haben zunächst vorrangig Kernbohrgeräte Verbreitung gefunden, die auf Bohrstativen oder Bohrständern geführt sind. Solche Stative können bei metallischen Werkstoffen etwa durch Magnetkraft oder mittels Unterdruck festgelegt werden. Daneben haben sich in jüngerer Zeit auch Anwendungen für ein handgeführtes Kernbohren in Metall ergeben. Es stellen sich dabei besondere Anforderungen an die Zentrierung der Bohrkrone, um etwa ein "Weglaufen" der Bohrkrone zu verhindern. Eine "weggelaufene" Bohrung sorgt für eine erhöhte Neigung zu Verklemmungen oder gar Brüchen des Werkzeugs. Daneben steigt die Wahrscheinlichkeit, dass die entstandene Bohrung nicht genutzt werden kann, da sie der erforderlichen Genauigkeit nicht entspricht.

Vor diesem Hintergrund liegt der Erfindung die Aufgabe zugrunde, eine Bohrmaschine anzugeben, die ein schnelles und produktives Bohren von Kernbohrungen, insbesondere in metallischen Werkstoffen, bei hoher Genauigkeit erlaubt. Weiterhin soll die Bohrmaschine möglichst einfach bedienbar sein. Ferner soll eine Verwendung einer solchen Bohrmaschine zum Bohren von Kernbohrungen angegeben werden.

Diese Aufgabe wird erfindungsgemäß gelöst durch eine Bohrmaschine, insbesondere eine handgeführte Kernbohrmaschine, mit einem Antrieb mit einem Motor, der mit einer Werkzeugspindel zu deren Antrieb koppelbar ist, wobei der Antrieb zumindest eine erste Übertragungsstufe und eine zweite Übertragungsstufe erlaubt, einer Zentrieraufnahme zur Aufnahme eines Pilotbohrers und mit einer Werkzeugaufnahme zur Aufnahme einer Bohrkrone, wobei die Bohrkrone und der Pilotbohrer im Wesentlichen konzentrisch zueinander aufnehmbar sind, wobei der Pilotbohrer, insbesondere zum Bohren einer Pilotbohrung, mittels der ersten Übertragungsstufe in einem ersten Drehzahlbereich antreibbar ist, und wobei die Bohrkrone, insbesondere zum Bohren einer Kernbohrung, mittels der zweiten Übertragungsstufe in einem zweiten Drehzahlbereich antreibbar ist, und wobei die Bohrmaschine ferner eine Schalteinrichtung aufweist, die mit dem Antrieb zusammenwirkt und dazu ausgebildet ist, den Antrieb selektiv zumindest in einer Zentrierbohrkonfiguration oder einer Kernbohrkonfiguration zu betreiben, wobei bei der Zentrierbohrkonfiguration zumindest der Pilotbohrer in der ersten Übertragungsstufe antreibbar ist, und wobei bei der Kernbohrkonfiguration zumindest die Bohrkrone in der zweiten Übertragungsstufe antreibbar ist.

Die Aufgabe der Erfindung wird auf diese Weise gelöst.

Erfindungsgemäß kann nämlich nunmehr beim Bohren einer Kernbohrung eine Pilotbohrung zur Zentrierung mit einer ersten Werkzeugdrehzahl vorgebohrt werden und die eigentliche Kernbohrung mit einer zweiten Werkzeugdrehzahl gebohrt werden. Somit ist einerseits eine gute Führung der Bohrmaschine beim Bohren gewährleistet. Andererseits erlaubt die erste Übertragungsstufe, den Pilotbohrer mit einer höheren Drehzahl anzutreiben, so dass der Zentriervorgang nicht zu einer wesentlichen Verlängerung der Dauer des Bohrvorgangs führt.

Eine solche Kernbohrmaschine eignet sich insbesondere zum Einbringen von Kernbohrungen in Metall.

Die erste Übertragungsstufe kann regelmäßig einen ersten Drehzahlbereich für den Pilotbohrer zur Verfügung stellen, der grundsätzlich höhere Werkzeugdrehzahlen erlaubt als die zweite Übertragungsstufe, die einen zweiten Drehzahlbereich für die Bohrkrone bereitstellt. Die Drehzahlen können dabei etwa auf die Durchmesser des Pilotbohrers bzw. der Bohrkrone angepasst sein. Es lässt sich somit in einfacher Weise eine geeignete Schnittgeschwindigkeit bewirken, die einerseits, insbesondere beim Bohren der Pilotbohrung, auf dem Pilotbohrer abgestimmt ist und andererseits, etwa beim Bohren der Kernbohrung, an die Bohrkrone angepasst ist.

Das Betreiben des jeweiligen (Teil-)Werkzeugs mit einer angepassten Werkzeugdrehzahl kann dazu beitragen, die Standzeit des Werkzeugs zu erhöhen, die Wärmeentwicklung beim Bohren günstig zu beeinflussen und den Verschleiß zu verringern. Die Leistungsfähigkeit der Bohrmaschine kann insgesamt verbessert werden. Das Führen der Bohrmaschine beim Bohren der Kernbohrung über die Pilotbohrung kann in zuverlässiger Weise dazu beitragen, ein "Weglaufen" des Werkzeugs zu verhindern oder zu verringern. Die Kernbohrung kann maßhaltig ausgeführt werden.

Zur Bereitstellung der zumindest einen ersten Übertragungsstufe und einer zumindest zweiten Übertragungsstufe kann der Antrieb etwa ein geeignetes Getriebe aufweisen. Der Antrieb kann jedoch ebenso mit einer geeigneten Ansteuerung des Motors versehen sein, die dessen Charakteristik in einer Weise beeinflusst, dass die Werkzeugspindel in verschiedenen Drehzahlbereichen antreibbar ist. Insofern kann der Antrieb etwa auch ein "virtuelles" Getriebe aufweisen.

Ein solches "virtuelles" Getriebe kann etwa eine gezielte Beeinflussung von Erregerwicklungen eines Elektromotors erlauben. Dabei können beispielsweise Erregerwicklungen zugeschaltet oder abgeschaltet werden, oder Abschnitte der Erregerwicklungen selektiv umgepolt werden, um die Charakteristik des Elektromotors zu beeinflussen. Es können sich somit verschiedene Drehzahl-Drehmoment-Kennlinien ergeben, die eine Getriebefunktionalität ermöglichen. Diese Kennlinien können in einem Drehzahl-Drehmoment-Diagramm etwa voneinander versetzt, insbesondere parallelverschoben sein oder verschiedene Steigungen aufweisen. Insbesondere Drehzahl-Drehmoment-Kennlinien mit unterschiedlicher Steigung können in ihrer Wirkung verschiedenen Stufen etwa eines Schaltgetriebes entsprechen. Zusätzlich oder alternativ kann die Erregerspannung des Motors variiert werden, um die Antriebscharakteristik zu beeinflussen. Die Erregerspannung kann grundsätzlich hinsichtlich Frequenz, absoluter Höhe oder hinsichtlich des Signalverlaufs variiert werden. Ferner ist eine Pulsweitenmodulation der Erregerspannung denkbar.

Es ist hinzuzufügen, dass die Aufnahme des Pilotbohrers und die Aufnahme der Bohrkrone mittelbar oder unmittelbar an der Werkzeugspindel erfolgen kann. Insbesondere kann etwa die Bohrkrone selbst zumindest einen Teil der Zentrieraufnahme für den Pilotbohrer aufweisen oder umgekehrt der Pilotbohrer einen Teil der Werkzeugaufnahme für die Bohrkrone bereitstellen. Grundsätzlich können die Bohrkrone und der Pilotbohrer als integriertes Werkzeug verstanden werden, wobei der Pilotbohrer und die Bohrkrone miteinander gekoppelt sind. Es ist ebenso denkbar, den Pilotbohrer und die Bohrkrone als separate (Teil-)Werkzeuge vorzusehen und deren Kopplung mittelbar über die Bohrmaschine bereitzustellen.

Der Bohrvorgang kann etwa in der Zentrierbohrkonfiguration begonnen werden. Beispielsweise dann, wenn der Pilotbohrer tief genug in das Werkstück eingedrungen ist, um eine gute Führung zu gewährleisten, kann die Bohrmaschine in die Kernbohrkonfiguration überführt werden.

Ein solches "Schalten" des Antriebs zwischen der ersten Übertragungsstufe und der zweiten Übertragungsstufe kann grundsätzlich manuell durch den Bediener erfolgen. Alternativ oder zusätzlich kann das "Schalten" automatisiert erfolgen.

Die Schalteinrichtung kann dazu beitragen, den Bohrvorgang weiter zu vereinfachen und zu beschleunigen. Die Bohrmaschine kann besonders effizient, insbesondere auch ohne einen weiteren manuellen Steuerungseingriff, betrieben werden.

Gemäß einer weiteren Ausgestaltung weist der Antrieb ein Getriebe, insbesondere ein mechanisches Getriebe, auf, das dem Motor und der Werkzeugspindel zwischengeschaltet ist, und das in der ersten Übertragungsstufe eine erste Übersetzung und in der zweiten Übertragungsstufe eine zweite Übersetzung bereitstellt.

Das Getriebe kann etwa als mechanisches Getriebe mit zumindest einem Zahnradsatz ausgeführt sein. Grundsätzlich können jedoch ebenso auch Reibgetriebe, fluidische Getriebe oder Ähnliches vorgesehen sein. Das Getriebe kann ebenso als virtuelles Getriebe ausgeführt sein, wobei dabei insbesondere die Charakteristik des Motors in geeigneter Weise beeinflusst werden kann.

Das Getriebe kann etwa als Schaltgetriebe, Verteilergetriebe oder als Kombination davon ausgebildet sein. Ein Schaltgetriebe kann zumindest einen Ausgang aufweisen, der mit verschiedenen Übersetzungen angesteuert werden kann. Ein Verteilergetriebe kann in seiner Grundgestaltung eine Mehrzahl von Ausgängen aufweisen, die grundsätzlich gleichzeitig mehrere Übersetzungen bereitstellen können.

Es ist weiter bevorzugt, wenn das Getriebe zumindest einen ersten Ausgang und einen zweiten Ausgang aufweist, die selektiv mit der Werkzeugspindel zur Drehmitnahme koppelbar sind, wobei der erste Ausgang der ersten Übertragungsstufe zugeordnet ist und wobei der zweite Ausgang der zweiten Übertragungsstufe zugeordnet ist.

Somit kann das Getriebe sowohl die erste Übertragungsstufe für den Pilotbohrer als auch die zweite Übertragungsstufe für die Bohrkrone bereitstellen. Dies kann grundsätzlich auch gleichzeitig erfolgen.

Ebenso können etwa der erste Ausgang oder der zweite Ausgang in geeigneter Weise zu- oder abgeschaltet, oder etwa blockiert werden, um die Bohrkrone bzw. den Pilotbohrer selektiv im ersten Drehzahlbereich bzw. im zweiten Drehzahlbereich anzutreiben.

Insbesondere dann, wenn der erste Ausgang mit dem zweiten Ausgang verblockt ist, kann in einfacher Weise ein Blockieren des Getriebes bzw. des Antriebs herbeigeführt werden. Ein solcher "Getriebestopp" kann etwa zum Lösen eines verklemmten Bohrwerkzeuges genutzt werden.

Gemäß einer Weiterbildung dieser Ausgestaltung weist die Werkzeugspindel einen ersten Spindelabschnitt und einen zweiten Spindelabschnitt auf, die zueinander verdrehbar sind, wobei der erste Spindelabschnitt mit dem ersten Ausgang und dem Pilotbohrer koppelbar ist, und wobei der zweite Spindelabschnitt mit dem zweiten Ausgang und der Bohrkrone koppelbar ist.

Auf diese Weise können grundsätzlich gleichzeitig die Zentrierbohrkonfiguration und die Kernbohrkonfiguration bereitgestellt werden. Somit kann das Getriebe etwa als Verteilergetriebe wirken, das permanent zwei Drehzahlen am Abtrieb bereitstellt. Der Pilotbohrer kann mit hoher Drehzahl in das Werkstück eindringen. Die Bohrkrone kann mit einer geeigneten, niedrigen Drehzahl angetrieben werden.

Bei einer derartigen Gestaltung bedarf es grundsätzlich keines Schaltvorgangs für das Getriebe zwischen der Zentrierbohrkonfiguration und die Kernbohrkonfiguration. Die Bedienbarkeit der Bohrmaschine kann sich wesentlich vereinfachen.

Es ist jedoch grundsätzlich auch denkbar, den ersten Spindelabschnitt bzw. den zweiten Spindelabschnitt selektiv mit dem ersten Ausgang bzw. dem zweiten Ausgang des Getriebes zu verbinden oder aber von diesen zu trennen. Für die Bohrmaschine können sich somit weitere Anwendungsmöglichkeiten und Betriebsmodi ergeben.

Gemäß einem weiteren Aspekt der Erfindung weist die Schalteinrichtung zumindest eine Kupplung auf, die dazu ausgebildet ist, zumindest den Pilotbohrer oder die Bohrkrone zur selektiven Drehmitnahme mit der Werkzeugspindel zu koppeln oder freizugeben.

Die Schalteinrichtung kann struktureller Bestandteil des Getriebes sein oder zumindest funktionell mittelbar oder unmittelbar mit diesem gekoppelt sein.

Die Kupplung kann vielfältig ausgestaltet sein. Es können darunter eine Bremse, Sperre, ein Freilauf oder Ähnliches verstanden werden. Die Kupplung kann etwa kraftschlüssig, reibschlüssig, formschlüssig oder in geeigneter Kombination mit den zu koppelnden Elementen zusammenwirken.

Gemäß einer weiteren Ausgestaltung der Erfindung weist die Bohrmaschine eine Steuereinrichtung auf, die dazu ausgebildet ist, abhängig von Betriebszuständen der Bohrmaschine den Antrieb selektiv in die Zentrierbohrkonfiguration oder die Kernbohrkonfiguration zu überführen.

Hierzu kann die Steuereinrichtung etwa in geeigneter Weise mit der Schalteinrichtung zusammenwirken.

Gemäß einer Weiterbildung dieser Ausgestaltung ist die Steuereinrichtung mit zumindest einem Sensor, insbesondere einem Kraftsensor, Wegsensor oder Anschlagdetektor, gekoppelt.

Somit kann die Bohrmaschine grundsätzlich etwa abhängig vom Bohrfortschritt automatisiert von der Zentrierbohrkonfiguration in die Kernbohrkonfiguration überführt werden.

Ein Kraftsensor kann etwa dazu ausgebildet sein, eine Vorschubkraft, die über den Bediener eingebracht wird, zu erfassen. Das Überschreiten oder Unterschreiten bestimmter Schwellwerte kann als Auslöser des Schaltvorgangs genutzt werden.

Ein Wegsensor kann dazu ausgebildet sein, eine Bohrtiefe des Pilotbohrers im Werkstück zu erfassen. Somit kann etwa dann, wenn die Bohrtiefe des Pilotbohrers für eine gute Führung der Bohrmaschine ausreichend ist, die Bohrmaschine in die Kernbohrkonfiguration überführt werden.

Ein Anschlagdetektor kann etwa dazu ausgebildet sein, ein Aufsetzen der Bohrkrone auf dem Werkstück zu erfassen. Das Aufsetzen kann einen Schaltimpuls zum Schalten des Antriebs auslösen.

Andere Sensoren sind ohne weiteres denkbar. So können etwa verschiedene Zustandsgrößen des Antriebs als Indikator für dessen Belastung herangezogen werden. Eine mittelbare oder unmittelbare Bestimmung eines Moments am Bohrwerkzeug, also etwa am Pilotbohrer oder der Bohrkrone, ist denkbar, um das Aufsetzen bzw. ein in Eingriff bringen der Bohrkrone oder des Pilotbohrers zu erfassen. Darauf basierend kann anschließend ein Schaltvorgang ausgelöst werden.

Es ist weiter bevorzugt, wenn, etwa nach erfolgtem Bohrvorgang, die Bohrmaschine von der Kernbohrkonfiguration in die Zentrierbohrkonfiguration überführt werden kann. Auf diese Weise kann die Bohrmaschine ohne weitere Vorbereitung für einen neuen Bohrvorgang zur Verfügung stehen.

Es versteht sich, dass zusätzlich oder alternativ zum Schalten mittels der Steuereinrichtung ebenso eine manuelle Betätigung der Schalteinrichtung ermöglicht sein kann. Ferner kann die Schalteinrichtung dazu ausgebildet sein, selektiv in einem Automatik-Modus oder einem manuellen Modus betrieben zu werden.

Die Flexibilität der Bohrmaschine kann sich weiter erhöhen. Insbesondere ein versierter Bediener kann die Schalteinrichtung manuell bedienen. Ein unerfahrener Bediener kann das Auslösen des Schaltvorgangs der Steuereinrichtung überlassen.

Gemäß einem weiteren Aspekt der Erfindung ist zumindest der Pilotbohrer oder die Bohrkrone relativ zur Werkzeugspindel längsverschieblich gelagert.

Gleichsam kann die Werkzeugspindel trotzdem zur selektiven Drehmitnahme des Pilotbohrers oder der Bohrkrone ausgebildet sein.

Eine längsverschiebliche Lagerung der Bohrkrone oder des Pilotbohrers kann es erlauben, diese selbst als "Sensor" zu nutzen und, etwa abhängig von deren Axiallage, die Schalteinrichtung auszulösen.

Ferner kann die Drehmitnahme des Pilotbohrers oder der Bohrkrone durch die Werkzeugspindel abhängig von deren Axiallage aktiviert oder aber deaktiviert werden. Es ist ferner vorstellbar, etwa eine Axialverschiebung der Bohrkrone zu nutzen, um den Pilotbohrer selektiv zuzuschalten oder abzuschalten. Alternativ oder zusätzlich kann die Bohrkrone etwa abhängig von der Axiallage des Pilotbohrers zu- oder abgeschaltet werden.

Gemäß einer Weiterbildung dieser Ausgestaltung schaltet eine Relativverschiebung der Bohrkrone gegenüber der Werkzeugspindel zumindest eine Kupplung des Pilotbohrers.

Somit kann insbesondere ein in Eingriff kommen der Bohrkrone eine Deaktivierung des Pilotbohrers ermöglichen. Auf diese Weise kann die Bohrmaschine von der Zentrierbohrkonfiguration in die Kernbohrkonfiguration überführt werden.

Es ist anzumerken, dass insbesondere bei besonders tiefen Kernbohrungen die Pilotbohrung nicht die gesamte Tiefe der Kernbohrung aufweisen muss. Eine wesentlich geringere Pilotbohrtiefe kann gleichwohl eine gute Führung der Bohrmaschine gewährleisten. Wenn der Pilotbohrer nach Erreichen einer ausreichenden Führungstiefe deaktiviert wird, kann einerseits der Bohrvorgang beschleunigt werden, da dann im Wesentlichen die gesamte Antriebsleistung an der Bohrkrone zur Verfügung stehen kann. Ebenso kann sich die Standzeit insbesondere des Pilotbohrers erhöhen, da dieser nunmehr wesentlich seltener im Eingriff steht.

Unter einer Deaktivierung kann einerseits ein Lösen der Drehmitnahme des Pilotbohrers durch die Werkzeugspindel verstanden werden. Ebenso kann jedoch auch eine axiale Verschiebung des Pilotbohrers relativ zur Bohrkrone ein weiteres Eindringen des Pilotbohrers in ein zu bohrendes Werkstück verhindern. Dabei kann gleichwohl weiterhin eine Drehmitnahme des Pilotbohrers durch die Werkzeugspindel gegeben sein.

Gemäß einem weiteren Aspekt der Erfindung ist in der Zentrierbohrkonfiguration zumindest ein Anschlagelement für den Pilotbohrer vorgesehen, das eine Längsverschiebung des Pilotbohrers gegenüber der Werkzeugspindel begrenzt.

Somit kann beim Bohren der Pilotbohrung im Wesentlichen die gesamte Vorschubkraft auf dem Pilotbohrer einwirken. Ein axiales Ausweichen des Pilotbohrers kann vermieden werden.

Gemäß einer Weiterbildung dieser Ausgestaltung gibt eine Längsverschiebung der Bohrkrone gegenüber der Werkzeugspindel das zumindest eine Anschlagelement des Pilotbohrers selektiv frei oder rückt dieses ein.

Somit kann die Bohrkrone in einfacher Weise den Pilotbohrer deaktivieren. Das Deaktivieren kann etwa ein Eintauchen des Pilotbohrers in die Werkzeugspindel erlauben oder eine Entkopplung der Drehmitnahme des Pilotbohrers durch die Werkzeugspindel bewirken.

Anschlagelemente können etwa als Kugeln, Rollen, Klinken oder Ähnliches ausgestaltet sein. Das zumindest eine Anschlagelement kann zumindest kraftschlüssig oder formschlüssig mit dem Pilotbohrer zusammenwirken.

Gemäß einem weiteren Aspekt der Erfindung ist zumindest ein Federelement vorgesehen, das eine Rückstellkraft erzeugt, die zumindest auf den Pilotbohrer oder die Bohrkrone in Richtung auf die Zentrierbohrkonfiguration einwirkt.

Das Federelement kann allgemein als Vorspannelement verstanden werden. Das Federelement kann es etwa ermöglichen, die Bohrmaschine nach erfolgtem Bohrvorgang selbsttätig von der Kernbohrkonfiguration in die Zentrierbohrkonfiguration zu überführen.

Daneben kann das Federelement grundsätzlich auch dazu beitragen, durch Verschiebung des Pilotbohrers einen Bohrkern aus der Bohrkrone auszuwerfen.

Besonders bevorzugt ist eine Bohrmaschinen-Werkzeug-Kombination mit einer Bohrmaschine nach einem der oben genannten Aspekte, mit einem Werkzeug, das einen Pilotbohrer und eine Bohrkrone aufweist, wobei der Pilotbohrer und die Bohrkrone konzentrisch zueinander aufnehmbar sind, und wobei insbesondere der Pilotbohrer in der Bohrkrone aufgenommen ist, wobei der Pilotbohrer und die Bohrkrone selektiv rotatorisch antreibbar sind, wobei der Pilotbohrer, insbesondere zum Bohren einer Pilotbohrung, in einem ersten Drehzahlbereich antreibbar ist, wobei die Bohrkrone, insbesondere zum Bohren einer Kernbohrung, in einem zweiten Drehzahlbereich antreibbar ist, und wobei insbesondere zumindest der Pilotbohrer oder die Bohrkrone längsverschieblich auf der Werkzeugspindel aufgenommen sind.

Gemäß einer weiteren Ausführung der Erfindung ist ein Adapter vorgesehen, der zur Aufnahme an der Werkzeugspindel ausgebildet ist und der eine erste Bohreraufnahme zum Spannen des Pilotbohrers aufweist, und eine zweite Bohreraufnahme zum Spannen der Bohrkrone aufweist, und der in Abhängigkeit von der Aktivierung der ersten Bohreraufnahme beim Spannen des Pilotbohrers die erste Übertragungsstufe aktiviert und bei der Aktivierung der zweiten Bohreraufnahme beim Spannen der Bohrkrone die zweite Übertragungsstufe aktiviert.

Hierbei kann der Adapter vorteilhaft ein erstes Adapterstück mit der ersten Bohreraufnahme zum Spannen des Pilotbohrers und ein zweites Adapterstück mit der zweiten Bohreraufnahme zum Spannen der Bohrkrone aufweisen, wobei die erste oder zweite Übertragungsstufe in Abhängigkeit davon aktiviert wird, welches Adapterstück an der Werkzeugspindel befestigt ist.

Die Aufgabe der Erfindung wird ferner gelöst durch eine Bohrmaschinen-Werkzeug-Kombination zum Bohren einer Kernbohrung, insbesondere in einem metallischen Werkstück, wobei eine Pilotbohrung im Wesentlichen in einem ersten Drehzahlbereich gebohrt wird und eine Kernbohrung im Wesentlichen in einem zweiten Drehzahlbereich gebohrt wird, und wobei der Pilotbohrer während des Bohrens der Kernbohrung in der Pilotbohrung verbleibt.

Die Aufgabe der Erfindung wird schließlich gelöst durch die Verwendung einer Werkzeug-Kombination umfassend einen Pilotbohrer und eine Bohrkrone mit einer Bohrmaschine der vorstehend beschriebenen Art.

Bei einer solchen Verwendung kann insbesondere bei einer handgeführten Kernbohrmaschine eine gute Führung des Werkzeugs ermöglicht sein. Der Bohrvorgang kann im Wesentlichen kontinuierlich durchgeführt werden, insbesondere ohne dass die Bohrmaschine zwischendurch abgesetzt werden muss.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine Seitenansicht einer erfindungsgemäßen Bohrmaschine mit einem Werkzeug zum Kernbohren;
- Fig. 2: eine vereinfachte schematische Ansicht einer ersten Gestaltung der Bohrmaschine gemäß Fig. 1;
- Fig. 3: einen Schnitt durch ein Getriebe einer erfindungsgemäßen Bohrmaschine;
- Fig. 4: eine perspektivische Ansicht des Getriebes gemäß Fig. 3 unter Auslassung des Gehäuses;
- Fig. 5: einen Schnitt durch ein gegenüber Fig. 3 abgewandeltes Getriebe in einer Zentrierbohrkonfiguration;
- Fig. 6: das Getriebe gemäß Fig. 5 in einer Kernbohrkonfiguration;
- Fig. 7: einen gebrochenen Schnitt durch das Getriebe gemäß Fig. 6 entlang der Linie VII-VII;
- Fig. 8: einen Schnitt durch das Getriebe gemäß Fig. 6 entlang der Linie VIII-VIII;
- Fig. 9a, 9b: eine schematisch stark vereinfachte Darstellung einer weiteren Ausgestaltung der Bohrmaschine gemäß Fig. 1 beim Bohren einer Pilotbohrung;
- Fig. 10a-10c: eine weitere schematisch stark vereinfachte Darstellung noch einer weiteren Ausgestaltung der Bohrmaschine gemäß Fig. 1 beim Bohren einer Pilotbohrung;
- Fig. 11a-11d: noch eine weitere schematisch stark vereinfachte Darstellung einer weiteren Ausgestaltung der Bohrmaschine gemäß Fig. 1 beim Bohren einer Pilotbohrung und einer Kernbohrung;
- Fig. 12: eine vereinfachte schematische gebrochene Ansicht der Bohrmaschine gemäß Fig. 11a-11d nach dem Kernbohrvorgang;
- Fig. 13: einen Adapter zur Befestigung an der Werkzeugspindel mit einem ersten Adapterstück zum Spannen des Pilotbohrers (Fig. 13a) und einem zweiten Adapterstück zum Spannen der Bohrkrone (Fig. 13b) und zur Steuerung der Übersetzung in Abhängigkeit vom eingesetzten Adapterstück.

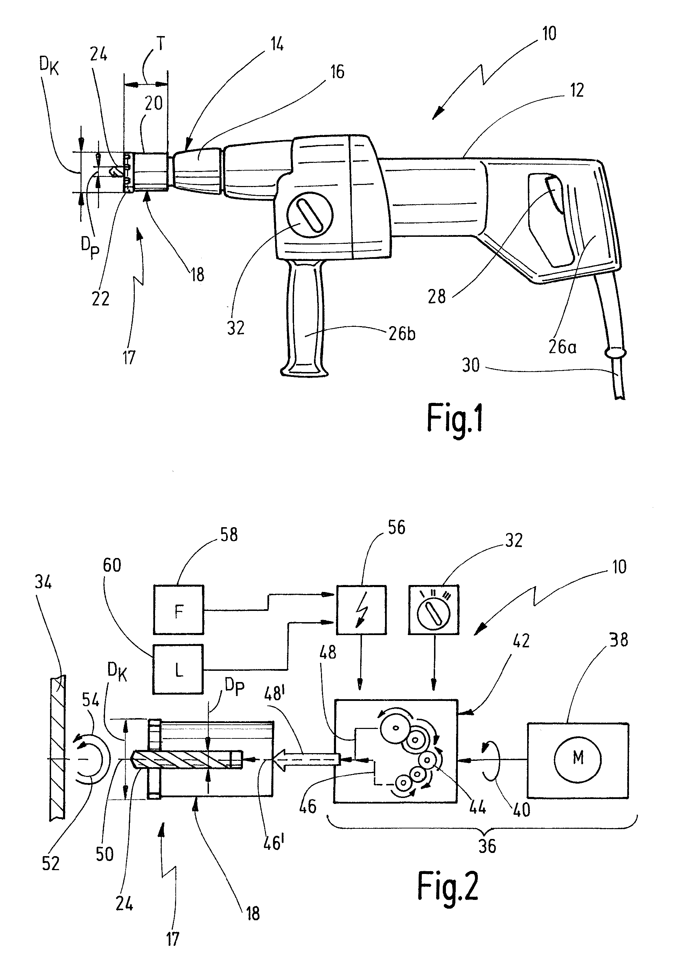

In Fig. 1 ist eine Bohrmaschine dargestellt und insgesamt mit 10 bezeichnet. Die Bohrmaschine 10 ist als handgeführte Kernbohrmaschine ausgebildet. Handgeführte bzw. handgehaltene Kernbohrmaschinen können von einem Bediener zum Bohren von Kernbohrungen oder Ähnlichem verwendet werden, ohne dass es einer separaten Führungsvorrichtung, etwa eines Gestells, Stativs oder eines Bohrständers, bedarf. Somit können Kernbohrungen mit hoher Produktivität bei geringem Zeitaufwand hergestellt werden.

Die Bohrmaschine 10 weist ein Gehäuse 12 auf, das etwa einen Motor und ein Getriebe beherbergt (in Fig. 1 nicht dargestellt). Am werkzeugseitigen Ende des Gehäuses 12 ist eine Werkzeugaufnahme 14 vorgesehen, die vorliegend eine Hülse 16 aufweist. Die Hülse 16 kann etwa durch Verschieben, Verdrehen oder eine kombinierte Bewegung zwischen einer Freigabestellung und einer Spannstellung verfahren werden. In der Spannstellung ist die Werkzeugaufnahme 14 dazu ausgebildet, ein Werkzeug 17 aufzunehmen und an der Bohrmaschine 10 festzulegen. In der Freigabestellung kann das Werkzeug 17 aus der Werkzeugaufnahme 14 entnommen werden. Ferner kann etwa ein weiteres Werkzeug 17 der Werkzeugaufnahme 14 zugeführt werden.

Das Werkzeug 17 ist vorliegend als Kernbohrwerkzeug ausgebildet. Das Werkzeug 17 weist eine Bohrkrone 18 auf, die mit einem im Wesentlichen rotationssymmetrischen Träger 20 und einem Schnittbereich 22 versehen ist. Der Träger 20 ist etwa napfförmig gestaltet und weist an seiner werkstückseitigen Umfangskante den Schnittbereich 22 auf. Der Schnittbereich 22 kann etwa eine Verzahnung aufweisen. Der Schnittbereich 22 kann mit Schneidmitteln versehen sein, insbesondere abrasiven Schneidmitteln. Alternativ oder zusätzlich ist eine segmentartige Bestückung des Schnittbereichs 22 vorstellbar. Die Verzahnung, Bestückung bzw. die Schneidmittel können insbesondere zum Zerspanen oder Trennen von Metall ausgebildet sein.

Konzentrisch zur Bohrkrone 18 weist das Werkzeug 17 einen Pilotbohrer 24 auf. Der Pilotbohrer 24 ist dazu ausgebildet, eine Zentrierbohrung oder Pilotbohrung zu bohren, um die Bohrmaschine 10 beim Bohren einer Kernbohrung zu führen. Die Abmessungen der Kernbohrung können sich im Wesentlichen aus einem Durchmesser D_{K} des Schnittbereichs 22 der Bohrkrone 18 und einer freien Tiefe T des Trägers 20 der Bohrkrone 18, abzüglich der Wandstärke der Stirnfläche ergeben. Der Pilotbohrer 24 weist einen Durchmesser D_{P} auf. Der Pilotbohrer 24 kann etwa als Spiralbohrer ausgeführt sein. Insbesondere beim Bohren von Kernbohrungen in Metallwerkstoffen kann der Pilotbohrer 24 als Metallbohrer ausgebildet sein.

Beim Bohren, insbesondere beim Bohren in Metall, ist eine sog. Schnittgeschwindigkeit, also eine Relativgeschwindigkeit zwischen dem Werkzeug und dem Werkstück von großer Bedeutung für Schnittleistung, Werkzeugstandzeit, Wärmeentwicklung und dergleichen. Insbesondere beim spanabhebenden Bohren hat die Schnittgeschwindigkeit große Auswirkungen auf die Spanbildung. Kriterien für die Auswahl einer geeigneten Schnittgeschwindigkeit können insbesondere ein Werkstoff des Werkzeugs oder ein Werkstoff des zu bearbeitenden Werkstücks sein. Bei gegebener Schnittgeschwindigkeit kann anhand des Werkzeugdurchmessers eine geeignete Werkzeugdrehzahl ermittelt werden. Beim Kernbohren mit der Bohrkrone 18 und dem Pilotbohrer 24 liegen jedoch zwei Durchmesser D_{K}, D_{P} vor, die sich im Regelfall deutlich voneinander unterscheiden. Der Durchmesser D_{K} der Bohrkrone 18 kann etwa zum Durchmesser D_{P} des Pilotbohrers 24 ein Verhältnis von 2:1, 3:1, 5:1 oder gar 10:1 oder höher aufweisen. Folglich kann es von Vorteil sein, das Verhältnis zwischen einer Drehzahl der Bohrkrone 18 und einer Drehzahl des Pilotbohrers 24 in gleicher Weise umgekehrt proportional zueinander zu gestalten. Auf diese Weise können der Pilotbohrer 24 und die Bohrkrone 18 mit zumindest ähnlichen Schnittgeschwindigkeiten betrieben werden.

Von einer "starren" umgekehrten Proportionalität zwischen den Verhältnissen der Durchmesser und der Drehzahlen bzw. Schnittgeschwindigkeiten der Bohrkrone 18 und des Pilotbohrers 24 kann etwa dann abgewichen werden, wenn sich die Werkstoffe, insbesondere die Schneidwerkstoffe, des Schnittbereichs 22 der Bohrkrone 18 und des Pilotbohrers 24 voneinander unterscheiden. Gleichwohl kann es regelmäßig bevorzugt sein, den Pilotbohrer 24 bei Bohren regelmäßig mit einer höheren Drehzahl als die Bohrkrone 18 anzutreiben. Zu diesem Zweck eignen sich grundsätzlich verschiedene Ausgestaltungen, auf die nachfolgend näher eingegangen wird.

Die Bohrmaschine 10 in Fig. 1 weist ferner Griffbereiche 26a, 26b auf, an denen ein Bediener die Bohrmaschine 10 sicher aufnehmen und beim Bohren, etwa bei einer Kernbohrung, führen kann. Insbesondere bei handgeführten Kernbohrmaschinen kann ein beidhändiges Halten und Führen von Vorteil sein, etwa um ein sich beim Bohren ergebendes Gegenmoment aufzunehmen.

Am hinteren Griffbereich 26a ist ein Schalter 28 aufgenommen, mit dem die Bohrmaschine 10 selektiv aktiviert oder deaktiviert werden kann. In Fig. 1 ist ferner eine Leitung 30 angedeutet, die etwa mit einem Netzanschluss zur Energieversorgung verbunden sein kann. Die Bohrmaschine 10 kann grundsätzlich einen elektrischen Antrieb aufweisen. Ebenso sind pneumatische oder aber hydraulische Antriebe denkbar.

Am Gehäuse 12 ist ferner ein Schalter 32 vorgesehen, der etwa mit einem Getriebe gekoppelt sein kann. Durch Betätigung des Schalters 32 kann der Bediener verschiedene Übersetzungen für das Werkzeug 17 vorwählen und insbesondere den Pilotbohrer 24 in einer ersten Übertragungsstufe und die Bohrkrone 18 in einer zweiten Übertragungsstufe betreiben.

In Fig. 2 ist die Bohrmaschine 10 schematisch stark vereinfacht symbolhaft dargestellt. Der äußere Aufbau der Bohrmaschine 10 kann etwa der Gestaltung in Fig. 1 entsprechen.

Die Bohrmaschine 10 ist zum Bohren einer Kernbohrung in einem Werkstück 34 ausgebildet. Dabei kann es sich insbesondere um einen metallischen Werkstoff handeln. Die Bohrmaschine 10 weist einen Antrieb 36 auf, der etwa im Gehäuse 12 aufgenommen sein kann, vgl. Fig. 1.

Der Antrieb 36 kann einen Motor 38 umfassen, der eine rotatorische Antriebsbewegung bereitstellen kann, vgl. einen mit 40 bezeichneten Pfeil. Der Antrieb 36 weist ferner ein Getriebe 42 auf, das über den Motor 38 antreibbar ist. Das Getriebe 42 weist ein Antriebsritzel 44 auf, mit dem der Motor 38 koppelbar ist.

Das Antriebsritzel 44 kann mit einer ersten Übertragungsstufe 46 und einer zweiten Übertragungsstufe 48 gekoppelt sein. Die erste Übertragungsstufe 46 dient dabei zum Antrieb des Pilotbohrers 24, vgl. einen gestrichelten Pfeil 46, 46'. Die zweite Übertragungsstufe 48 ist mit der Bohrkrone 18 zu deren Antrieb gekoppelt, vgl. einen Pfeil 48 und einen Blockpfeil 48'. In Fig. 2 ist ferner schematisch angedeutet, dass die zweite Übertragungsstufe 48 eine größere Untersetzung der Antriebsbewegung 40 des Motors 38 bewirken kann als die erste Übertragungsstufe 46.

Mit anderen Worten ist das Getriebe 42 dazu ausgebildet, die Antriebsbewegung 40 des Motors 38 selektiv in eine Rotation des Pilotbohrers 24 um eine Längsachse 50 bei einer ersten Drehzahl zu überführen, vgl. einen mit 52 bezeichneten Pfeil. Daneben ist das Getriebe 42 dazu ausgebildet, die Antriebsbewegung 40 des Motors 38 selektiv in eine Rotation der Bohrkrone 18 um die Längsachse 50 bei einer zweiten Drehzahl zu überführen, vgl. einen mit 54 bezeichneten Pfeil. Dabei kann die erste Drehzahl 52 grundsätzlich höher als die zweite Drehzahl 54 sein. Der Pilotbohrer 24 kann "schneller" rotieren und somit trotz seines geringeren Durchmessers D_{P} mit einer günstigen Schnittgeschwindigkeit betrieben werden. Die Bohrkrone 18 kann bei grundsätzlich gleicher Drehzahl des Motors 38 "langsamer" rotieren.

Verschiedene Einrichtungen können mit dem Antrieb 36 bzw. dem Getriebe 42 gekoppelt sein, um den Antrieb 36 etwa während verschiedener Abschnitte eines Bohrvorgangs zu veranlassen, bspw. die erste Übertragungsstufe 46 oder die zweite Übertragungsstufe 48 selektiv zu aktivieren oder aber zu deaktivieren. Hierzu kann etwa der Schalter 32 zur Anwendung kommen, vgl. auch Fig. 1. Der Schalter 32 in Fig. 2 weist etwa drei Schaltstellungen auf. Beispielhaft kann in einer ersten Schaltstellung I ein Antrieb des Pilotbohrers 24 mittels der ersten Übertragungsstufe 46 gewährleistet sein. In dieser Schaltstufe I kann insbesondere eine Pilotbohrung gesetzt werden, wobei vorzugsweise noch kein Eingriff der Bohrkrone 18 in das Werkstück 34 erfolgt. In einer zweiten Schaltstufe II kann dagegen etwa die Bohrkrone 18 aktiviert werden bzw. mittels der zweiten Übertragungsstufe 48 angetrieben werden. Dies kann bei grundsätzlich geringerer Drehzahl und größerem Drehmoment als der Antrieb des Pilotbohrers 24 in der Schaltstufe I erfolgen.

Daneben weist der Schalter 32 eine dritte Schaltstufe III auf. Die Schaltstufe III kann etwa dazu ausgebildet sein, eine automatische Ansteuerung des Getriebes 42 zu erlauben. Hierzu kann eine Steuereinrichtung 56 vorgesehen sein, die mit Sensoren, etwa einem Kraftsensor 58 oder einem Wegsensor 60, gekoppelt sein kann. Die Sensoren 58, 60 können dazu ausgebildet sein, Zustandsgrößen der Bohrmaschine 10 zu erfassen und an die Steuereinrichtung 56 zu übermitteln. Der Wegsensor 60 kann etwa dazu ausgebildet sein, eine Eindringtiefe des Pilotbohrers 24 zu erfassen. Der Kraftsensor 58 kann etwa dazu ausgebildet sein, eine durch den Bediener aufgebrachte Vorschubkraft zu erfassen und an die Steuereinrichtung 56 zu übermitteln. Andere Sensoren sind denkbar, die etwa die Drehzahl des Motors 38, des Pilotbohrers 24 bzw. der Bohrkrone 18 erfassen. Auch Drehzahlen des Getriebes 42 können überwacht werden. Daneben ist eine Erfassung eines Drehmoments am Motor 38, am Pilotbohrer 24 oder an der Bohrkrone 18 denkbar. Ferner kann etwa eine Relativlage des Pilotbohrers 24 gegenüber der Bohrkrone 18 überwacht werden.

Abhängig von erfassten Zustandsgrößen der Bohrmaschine 10 kann die Steuereinrichtung 56 ein automatisches Schalten des Getriebes 42 bewirken. Dabei können insbesondere die erste Übertragungsstufe 46 oder die zweite Übertragungsstufe 48 selektiv zugeschaltet, abgeschaltet oder aber gesperrt werden.

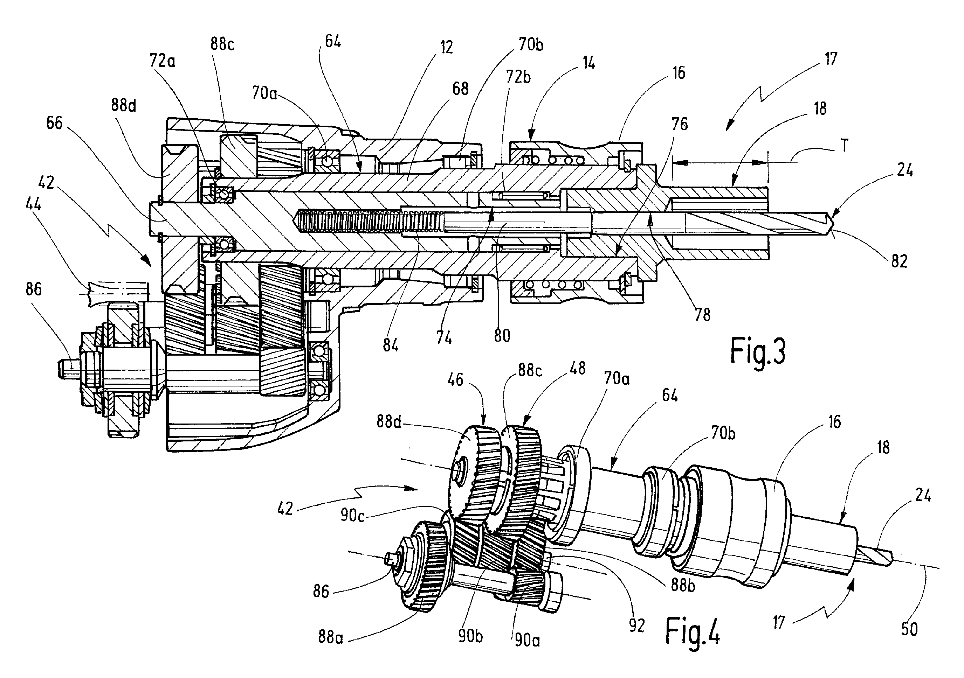

In Fig. 3 ist das Getriebe 42, etwa der Bohrmaschine 10 gemäß Fig. 2, geschnitten dargestellt. Fig. 4 zeigt eine zugehörige perspektivische Ansicht unter Auslassung des Gehäuses 12.

Das Getriebe 42 ist mit einer Werkzeugspindel 64 gekoppelt, an der das Werkzeug 17 aufgenommen ist. Die Werkzeugspindel 64 weist einen ersten Spindelabschnitt 66 und einen zweiten Spindelabschnitt 68 auf. Die Werkzeugspindel 64 ist über Spindellager 70a, 70b im Gehäuse 12 der Bohrmaschine 10 gelagert. Daneben ist der zweite Spindelabschnitt 68 über Spindellager 72a, 72b im ersten Spindelabschnitt 66 drehbar gelagert.

In einer Ausnehmung 74 im Inneren der Werkzeugspindel 64 ist ein Schaft 80 des Pilotbohrers 24 angeordnet. Der Pilotbohrer 24 ist ferner an einer Zentrieraufnahme 78 aufgenommen, die der Bohrkrone 18 zugeordnet ist. Die Bohrkrone 18 ist an einer Werkzeugaufnahme 76 des zweiten Spindelabschnitts 68 der Werkzeugspindel 64 aufgenommen. Der erste Spindelabschnitt 66 ist dazu ausgebildet, den Pilotbohrer 24 rotatorisch anzutreiben. Der zweite Spindelabschnitt 68 ist dazu ausgebildet, die Bohrkrone 18 rotatorisch anzutreiben. Die Spindelabschnitte 66, 68 sind relativ zueinander verdrehbar und können gleichzeitig mit verschiedenen Drehzahlen betrieben werden. Somit kann auch der Pilotbohrer 24 relativ zur Bohrkrone 18 verdreht werden.

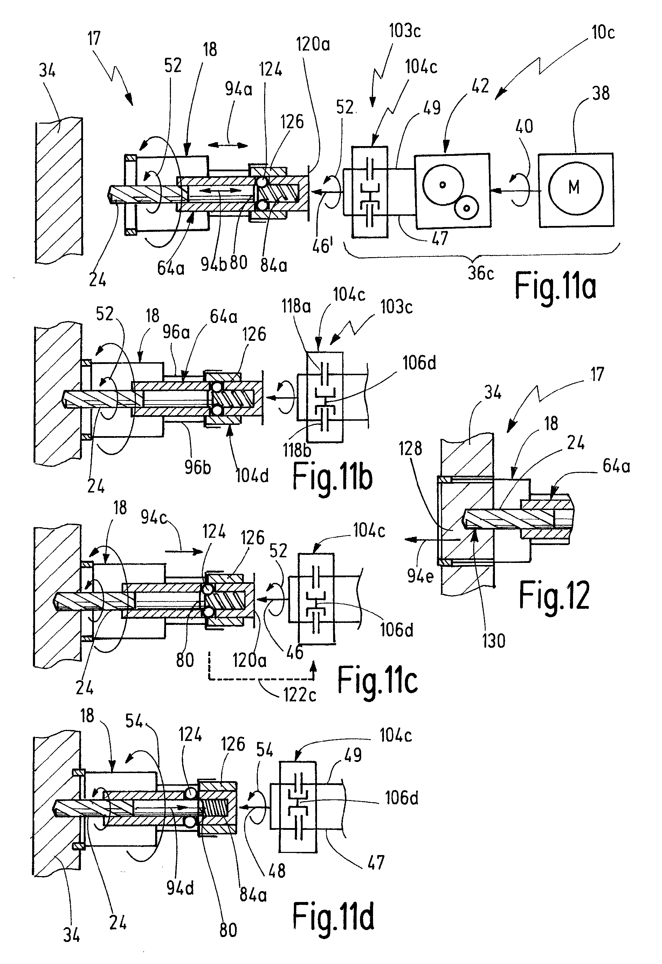

Der Pilotbohrer 24 ist als Spiralbohrer ausgebildet und weist eine Schneide 82 auf, die eine Zentrierspitze aufweisen kann. Der Pilotbohrer 24 ist über den Schaft 80 gegen die Kraft eines Federelements 84 in der Ausnehmung 74 des zweiten Spindelabschnitts 68 längsverschieblich angeordnet. Eine durch das Federelement 84 in Richtung auf das Werkstück 34 aufgebrachte Kraft auf den Pilotbohrer 24 kann etwa dazu genutzt werden, diesen zu verlagern, um einen Bohrkern nach erfolgter Bohrung aus dem Werkzeug 17 auszuwerfen, vgl. hierzu etwa Fig. 12.

Das Getriebe 42 weist eine Eingangswelle 86 auf, die über das Antriebsritzel 44 antreibbar ist, das mit einem Rad 88a gekoppelt ist. Das Antriebsritzel 44 kann ferner mit dem Motor 38 gekoppelt sein, vgl. Fig. 2. Die Eingangswelle 86 weist ein Ritzel 90a auf, vgl. Fig. 4. Das Ritzel 90a ist mit einem Rad 88b einer Zwischenwelle 92 gekoppelt. Die Zwischenwelle 92 weist ferner ein Ritzel 90b und ein weiteres Ritzel 90c auf. Das Ritzel 90b ist mit einem Rad 88c gekoppelt, das am zweiten Spindelabschnitt 68 angeordnet ist. Das Ritzel 90c ist mit einem Rad 88d gekoppelt, das am ersten Spindelabschnitt 66 angeordnet ist. Das Ritzel 90c und das Rad 88d sind in der ersten Übertragungsstufe 46 zugeordnet, die vorrangig zum Antrieb des Pilotbohrers 24 dient. Das Ritzel 90b und das Rad 88c sind der zweiten Übertragungsstufe 48 zugeordnet, die vorrangig zum Antrieb der Bohrkrone 18 dient. Die Bohrkrone 18 kann grundsätzlich mit einer geringeren Drehzahl als der Pilotbohrer 24 angetrieben werden.

Das in den Figuren 3 und 4 gezeigte Getriebe 42 kann als Verteilergetriebe verstanden werden. Das Getriebe 42 ist dazu ausgebildet, gleichzeitig mittels der ersten Übertragungsstufe 46 eine erste Drehzahl am ersten Spindelabschnitt 66 und mittels der zweiten Übertragungsstufe 48 eine zweite Drehzahl am zweiten Spindelabschnitt 68 bereitzustellen. Somit können der Pilotbohrer 24 und die Bohrkrone 18 grundsätzlich gleichzeitig in jeweils geeigneten Drehzahlbereichen angetrieben werden.

Ferner können grundsätzlich auch Elemente vorgesehen sein, die dazu ausgebildet sind, selektiv zumindest den Antrieb oder einen Vorschub des Pilotbohrers 24 oder der Bohrkrone 18 zu unterbinden.

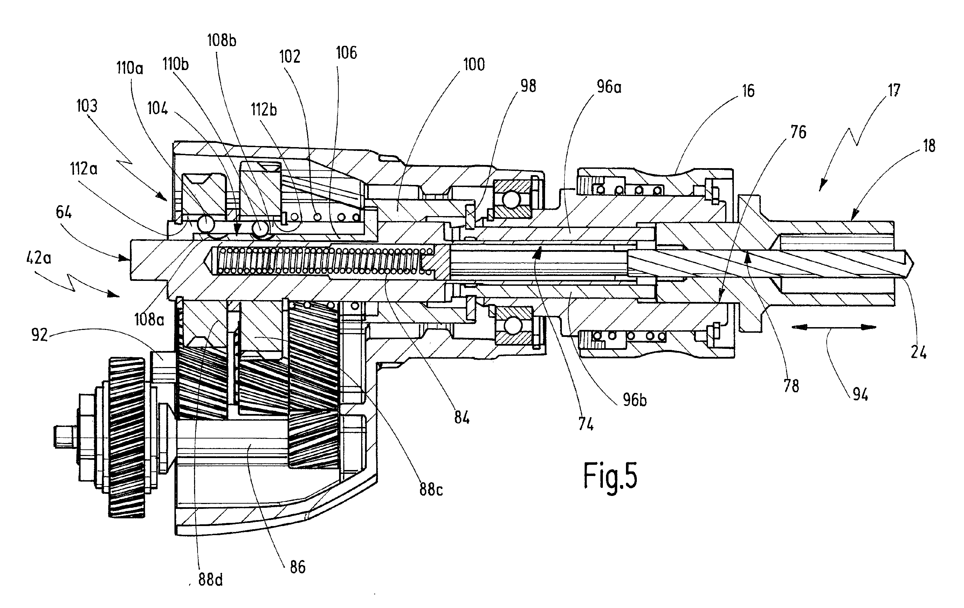

In Zusammenschau ist in den Figuren 5 bis 8 eine weitere Ausgestaltung eines Getriebes 42a gezeigt, das grundsätzlich ebenso in der Kernbohrmaschine 10 gemäß Fig. 1 verbaut sein kann.

Das Getriebe 42a weist einen der Gestaltung des Getriebes 42 gemäß Fig. 3 ähnlichen Grundaufbau auf. Es ist beim Getriebe 42a jedoch eine abgewandelte Funktionalität vorgesehen.

Das Getriebe 42a ist schaltbar. Das Schalten des Getriebes 42a kann grundsätzlich manuell über den Schalter 32 erfolgen, vgl. Fig. 1 und 2. Daneben ist ein automatisiertes Schalten abhängig von Betriebszuständen der Bohrmaschine 10 durch die Steuereinrichtung 56 möglich, vgl. etwa Fig. 2.

Um eine Schaltfunktionalität zu erlauben, ist die Bohrkrone 18 gegenüber der Werkzeugspindel 64 längsverschieblich ausgebildet, vgl. ein mit 94 bezeichneten Pfeil. Die Werkzeugspindel 64 ist in den Figuren 5 bis 8 im Gegensatz zur in Fig. 3 gezeigten Ausgestaltung im Wesentlichen einstückig ausgebildet. Somit ist die Werkzeugspindel 64 grundsätzlich dazu ausgebildet, die Bohrkrone 18 und den Pilotbohrer 24 gemeinsam mit der gleichen Drehzahl anzutreiben.

Das Getriebe 42a ist jedoch schaltbar, so dass etwa bei einem Kernbohrvorgang zunächst ein erster Drehzahlbereich vorgesehen sein kann, bei dem der Pilotbohrer 24 in das Werkstück 34 eindringt. Hiernach kann ein Schaltvorgang erfolgen, danach kann im Wesentlichen die Bohrkrone 18 in einem zweiten Drehzahlbereich angetrieben werden und in das Werkstück 34 eindringen. Der Pilotbohrer 24 kann grundsätzlich parallel im gleichen Drehzahlbereich mitlaufen. Es ist jedoch auch vorstellbar, die Drehmitnahme des Pilotbohrers 24 durch die Spindel 64 zu unterbinden, oder aber den Pilotbohrer 24 am weiteren Eindringen in das Werkstück 34 zu hindern. Hierzu kann etwa vorgesehen sein, den Pilotbohrer 24 in die Ausnehmung 74 der Werkzeugspindel 64 eintauchen zu lassen, wenn die Bohrkrone 18 mit dem Werkstück 34 in Eingriff kommt. Eine solche Ausgestaltung wird beispielhaft nachfolgend anhand der Figuren 11a-11d näher erläutert.

In Fig. 5 ist die Bohrkrone 18 an ihrem maschinenseitigen Ende mit Stößeln 96a, 96b gekoppelt und kann diese bei einer Längsverschiebung in Richtung auf das Getriebe 42a relativ zur Spindel 64 verschieben. Die Stößel 96a, 96b sind mit einer Scheibe 98 gekoppelt und können über diese auf ein Druckstück 100 einwirken. Das Druckstück 100 ist durch ein Federelement 102 in Richtung auf das Werkzeug 17 vorgespannt.

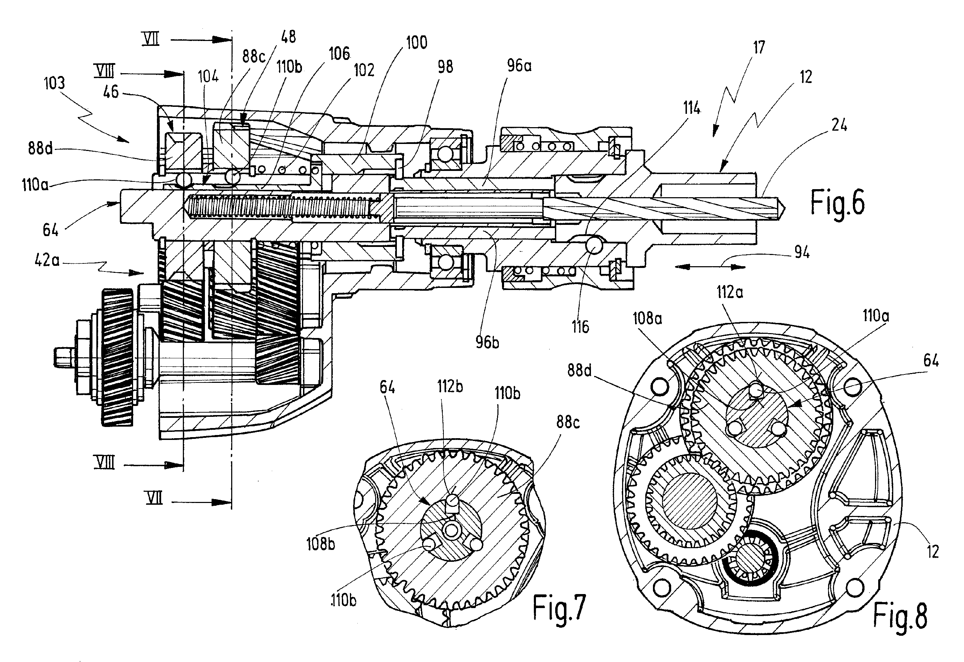

Das Druckstück 100 ist dazu ausgebildet, eine Schalteinrichtung 103 zu betätigen, die eine Kupplung 104 aufweist. Hierzu ist das Druckstück 100 mit einem Schaltelement 106 gekoppelt, das etwa als Schaltschieber ausgebildet sein kann. Die Kupplung 104 weist Mitnahmeelemente 110a, 110b auf, die etwa als Kugeln ausgebildet sein können. Die Mitnahmeelemente 110a, 110b können durch das Schaltelement 106 selektiv in Ausnehmungen 112a, 112b der Räder 88d, 88c eingerückt werden. Somit kann die Schalteinrichtung 103 selektiv zumindest einen Antrieb der Werkzeugspindel 64 mittels der ersten Übertragungsstufe 46 oder der zweiten Übertragungsstufe 48 bewirken, vgl. auch Fig. 6.

Zu diesem Zweck weist das Schaltelement 106 Raststellen 108a, 108b auf, die die Mitnahmeelemente 110a, 110b abhängig von der Lage des Schaltelements 106 selektiv aufnehmen können, so dass diese aus den Ausnehmungen 112a, 112b ausrücken können.

In Fig. 5 ist das Getriebe 42a etwa in einer Zentrierbohrkonfiguration dargestellt. Die Bohrkrone 18 ist nicht in Richtung auf das Getriebe 42a entlang der Werkzeugspindel 64 verschoben. Insbesondere das Federelement 102 kann dabei über das Schaltelement 106, das Druckstück 100, die Scheibe 98 und die Stößel 96a, 96b auf die Bohrkrone 18 einwirken. Mit anderen Worten kann das Federelement 102 dazu beitragen, die Bohrkrone 18 in Richtung auf die Zentrierbohrkonfiguration zu verlagern. In dieser Konfiguration ist das Schaltelement 106 derart bezüglich der Werkzeugspindel 64 angeordnet, dass das Mitnahmeelement 110a aus der Raststelle 108a austreten und in die Ausnehmung 112a des Rades 88d einrücken kann. Das Mitnahmeelement 110b ist aus der Ausnehmung 112b des Rades 88c ausgerückt und in der Raststelle 108b aufgenommen.

Somit wirkt in der in Fig. 5 gezeigten Konfiguration eine von der Eingangswelle 86 auf die Zwischenwelle 92 übertragene Rotation über das Rad 88d, das der ersten Übertragungsstufe 46 zugehörig ist, auf die Werkzeugspindel 64 ein. Das Rad 88c, das der zweiten Übertragungsstufe 48 zugeordnet ist, ist von der Werkzeugspindel 64 entkoppelt. In der Zentrierbohrkonfiguration kann der Pilotbohrer 24 in einem hohen Drehzahlbereich angetrieben werden, um eine Pilotbohrung zu bohren.

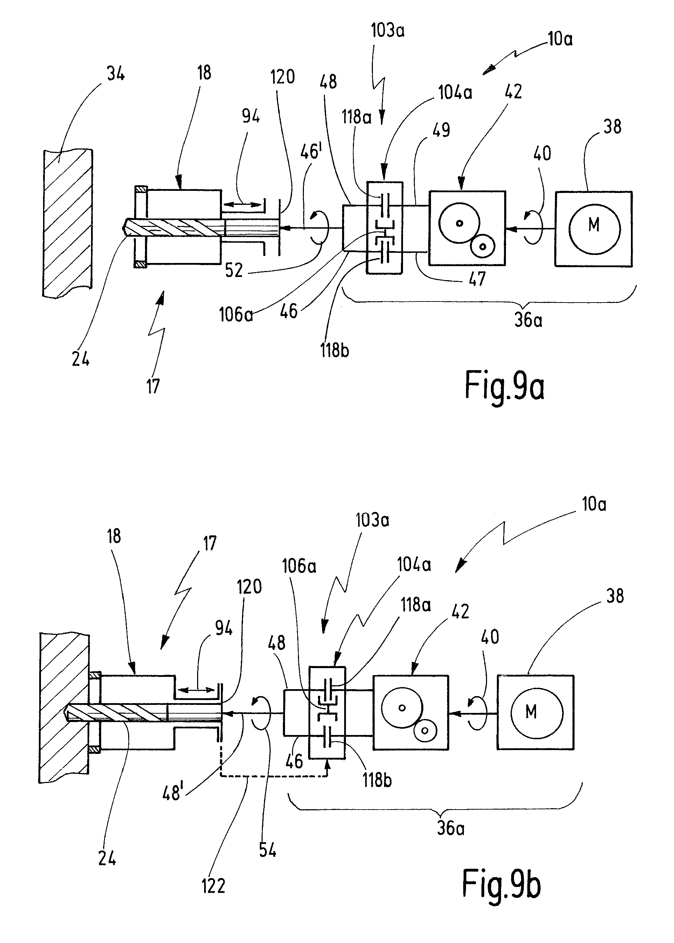

In den Figuren 6 bis 8 ist das Getriebe 42a etwa in einer Kernbohrkonfiguration dargestellt. Das Schalten der Schalteinrichtung 103 kann durch ein Verschieben der Bohrkrone 18 relativ zur Werkzeugspindel 64 bewirkt werden, vgl. auch den Pfeil 94. Das Verschieben kann etwa durch eine Anlage der Bohrkrone 18 am Werkstück 34 bewirkt werden, vgl. auch Fig. 9a und 9b.

Eine Längsführung 114 an der Bohrkrone 18, die mit einem Mitnahmeelement 116 zusammenwirkt, erlaubt eine gewisse Längsverschiebung der Bohrkrone 18 relativ zur Werkzeugspindel 64, obgleich dabei weiterhin eine Drehmitnahme der Bohrkrone 18 gewährleistet ist. Das Mitnahmeelement 116 ist an der Werkzeugspindel 64 aufgenommen. Die Längsverschiebung der Bohrkrone 18 hat in Fig. 6 ebenso eine Längsverschiebung der Stößel 96a, 96b, der Scheibe 98, des Druckstücks 100 und des Schaltelements 106 in Richtung auf das Getriebe 42a bewirkt. Im Gegensatz zur in Fig. 5 gezeigten Zentrierbohrkonfiguration ist in der Kernbohrkonfiguration das Mitnahmeelement 110a aus der Ausnehmung 112a ausgerückt und von der Raststelle 108a aufgenommen, vgl. auch Fig. 8. Das Mitnahmeelement 110b hingegen ist in die Ausnehmung 112b eingerückt und aus der Raststelle 108b hervorgetreten, vgl. auch Fig. 7. Somit ist das Rad 88c, das der zweiten Übertragungsstufe 48 zugeordnet ist, zur Drehmitnahme mit der Werkzeugspindel 64 verbunden. Das Rad 88d, das der ersten Übertragungsstufe 46 zugeordnet ist, ist von der Werkzeugspindel 64 entkoppelt. In der Kernbohrkonfiguration wird die Werkzeugspindel 64 und die Bohrkrone 18 in einem für diese geeigneten Drehzahlbereich angetrieben, der grundsätzlich geringere Drehzahlen als in der Zentrierbohrkonfiguration ermöglicht.

Es ist grundsätzlich vorstellbar, die Schalteinrichtung 103 mit einem Schalter zur manuellen Betätigung, etwa dem Schalter 32, zu koppeln. Somit kann der Bediener einerseits vom automatisierten Schaltvorgang (durch die Verlagerung der Bohrkrone 18) profitieren, andererseits das Getriebe 42a manuell in eine geeignete Stellung überführen.

In den Figuren 9a und 9b ist das Setzen eines Pilotlochs eines beispielhaften Kernbohrvorgangs angedeutet. Eine Bohrmaschine 10a ist dabei schematisch stark vereinfacht dargestellt. Ein Antrieb 36a weist einen Motor 38 und ein Getriebe 42 auf. Das Getriebe 42 weist einen ersten Ausgang 47 und einen zweiten Ausgang 49 auf. Der erste Ausgang 47 ist der ersten Übertragungsstufe 46 zugehörig. Der zweite Ausgang 49 ist der zweiten Übertragungsstufe 48 zugeordnet. Eine Schalteinrichtung 103a ist mit einer Kupplung 104a versehen, die Teilkupplungen 118a, 118b aufweist. Die Teilkupplung 118a ist der zweiten Übertragungsstufe 48 zugeordnet. Die Teilkupplung 118b ist der ersten Übertragungsstufe 46 zugeordnet. Ein Schaltelement 106a ist dazu ausgebildet, wechselseitig selektiv die Teilkupplung 118a oder die Teilkupplung 118b zu öffnen oder zu schließen. Abhängig von der Stellung des Schaltelements 106a kann das Werkzeug 17 der ersten Übertragungsstufe 46, 46' oder mittels der zweiten Übertragungsstufe 48, 48' angetrieben werden.

In Fig. 9a ist die Bohrmaschine 10a in der Zentrierbohrkonfiguration gezeigt. Die Kupplung 118a ist geöffnet, die Kupplung 118b geschlossen. In dieser Konfiguration kann der Pilotbohrer 24 in einem hohen Drehzahlbereich angetrieben werden, um eine Pilotbohrung zu setzen, vgl. den Pfeil 52. Der Pilotbohrer ist in der ersten Übertragungsstufe 46, 46' antreibbar. Dabei kann die Bohrkrone 18 grundsätzlich von der Drehmitnahme entkoppelt sein, oder aber gemeinsam mit dem Pilotbohrer 24 rotieren.

In Fig. 9b ist der Pilotbohrer 24 in das Werkstück 34 eingedrungen, ferner ist die Bohrkrone 18 zur Anlage am Werkstück 34 gekommen. Dabei ist die Bohrkrone 18 relativ zum Pilotbohrer 24 verschoben worden, vgl. einen mit 94 bezeichneten Pfeil. Dieses Verschieben in Richtung auf einen Anschlag 120 kann detektiert werden und einen Schaltimpuls 122 erzeugen, der etwa von einer Steuereinrichtung 56, vgl. etwa Fig. 2, ausgewertet wird, um das Schaltelement 106a entsprechend anzusteuern. In Fig. 9b ist das Schaltelement 106a von der Teilkupplung 118b in Richtung auf die Teilkupplung 118a verlagert. Die Teilkupplung 118a ist geschlossen, die Teilkupplung 118b geöffnet. Das Werkzeug 17 kann mittels der zweiten Übertragungsstufe 48, 48' in einem niedrigen Drehzahlbereich angetrieben werden, vgl. etwa den Pfeil 54, der besonders zum Kernbohren geeignet ist.

In der Kernbohrkonfiguration wird zumindest die Bohrkrone 18 im zweiten Drehzahlbereich betrieben. Der Pilotbohrer 24 kann gleichsam ebenso im zweiten Drehzahlbereich angetrieben werden, oder aber selektiv von der Drehmitnahme ausgenommen sein.

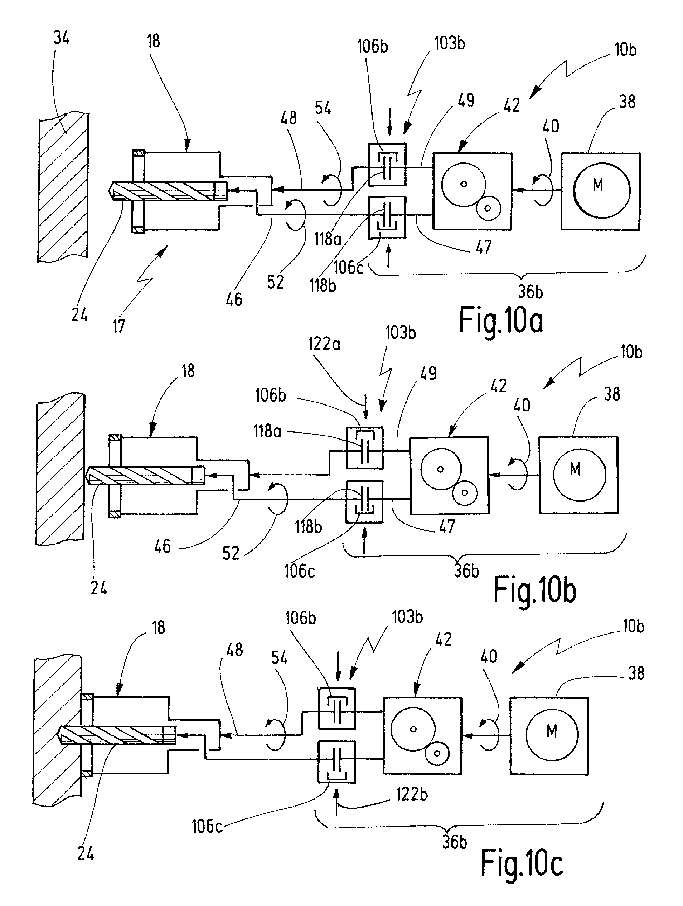

In den Figuren 10a bis 10c ist eine weitere Kernbohrmaschine 10b bei einem Kernbohrvorgang schematisch stark vereinfacht dargestellt.

Die Kernbohrmaschine 10b weist einen gegenüber den Figuren 9a, 9b abgewandelten Antrieb 36b auf. Sowohl der erste Ausgang 47 als auch der zweite Ausgang 49 des Getriebes 42 können unabhängig voneinander selektiv mit dem Werkzeug 17 zu dessen Drehmitnahme gekoppelt werden. Der erste Ausgang 47 ist der ersten Übertragungsstufe 46 zugehörig und über die Teilkupplung 118b mit dem Pilotbohrer 24 zu dessen Drehmitnahme gekoppelt. Der zweite Ausgang 49 ist der zweiten Übertragungsstufe 48 zugeordnet und über die Teilkupplung 118a mit der Bohrkrone 18 zu deren Drehmitnahme gekoppelt.

Schaltelemente 106b, 106c können die Teilkupplungen 118a, 118b unabhängig voneinander öffnen oder schließen. In Fig. 10a sind die Teilkupplungen 118a, 118b geschlossen. Der Pilotbohrer 24 wird in einem ersten Drehzahlbereich angetrieben, vgl. den Pfeil 52. Die Bohrkrone 18 wird gleichzeitig in einem zweiten Drehzahlbereich angetrieben, vgl. den Pfeil 54.

In Fig. 10b ist das Schaltelement 106b der Teilkupplung 118a ausgerückt, die Bohrkrone 18 ist vom zweiten Ausgang 49 des Getriebes 42 entkoppelt. Das Schaltelement 106c ist eingerückt, so dass eine Drehmitnahme des Pilotbohrers 24 in der ersten Übertragungsstufe 46 erfolgt. Die Bohrmaschine 10b befindet sich in der Zentrierbohrkonfiguration. Die gesamte Antriebsleistung kann im Wesentlichen dem Pilotbohrer 24 zugeführt werden.

In Fig. 10c ist die Pilotbohrung im Werkstück 34 hergestellt. Die Bohrmaschine 10b ist in die Kernbohrkonfiguration überführt. Hierzu ist das Schaltelement 106c ausgerückt und das Schaltelement 106b eingerückt. Der Pilotbohrer 24 ist von der Drehmitnahme ausgeschlossen. Die Bohrkrone 18 wird mittels der zweiten Übertragungsstufe 48 in einen zweiten, niedrigen Drehzahlbereich angetrieben, vgl. den Pfeil 54. Die gesamte Antriebsleistung kann im Wesentlichen zum Kernbohren aufgebracht werden. Beim Eindringen der Bohrkrone 18 in das Werkstück 34 kann sich diese relativ zum Pilotbohrer 24 verlagern, der nicht weiter in das Werkstück 34 eindringt.

Die in den Fig. 10a bis 10c gezeigte Ausgestaltung kann etwa als eine Weiterbildung des in den Fig. 3 und 4 gezeigten Getriebes 42 verstanden werden.

Die Figuren 11a bis 11d veranschaulichen einen weiteren Antrieb 36c bei einer Bohrmaschine 10c. Der Antrieb 36c entspricht in seinem Grundaufbau etwa dem Antrieb 36a gemäß den Figuren 9a, 9b.

Daneben ist jedoch eine Werkzeugspindel 64a vorgesehen, die dazu ausgebildet ist, ein selektives Eintauchen des Pilotbohrers 24 zu erlauben, um diesen vom weiteren Eindringen in das Werkstück 34 abzuhalten. Die Werkzeugspindel 64a weist Anschlagelemente 124 auf, etwa in Form von Kugeln oder Rollen. Die Anschlagelemente 124 sind durch eine Hülse 126 in einer Lage gesichert, die eine axiale Lagebegrenzung des Pilotbohrers 24 gegenüber der Werkzeugspindel 64a ermöglicht. In der in Fig. 11a gezeigten Konfiguration kann der Pilotbohrer 24 nicht über die Anschlagelemente 124 hinaus gegen die Kraft eines Federelements 84a in Richtung auf das Getriebe 42 verschoben werden, vgl. einen mit 94b bezeichneten Pfeil.

Der Pilotbohrer 24 kann in der Zentrierbohrkonfiguration mit hohen Vorschubkräften in das Werkstück 34 eindringen, ohne dass es zu einer Verlagerung entlang der Werkzeugspindel 64a über die Anschlagelemente 124 hinaus kommen kann. Dabei kann der Pilotbohrer 24 im ersten Drehzahlbereich angetrieben werden, etwa analog zur in den Fig. 9a, 9b gezeigten Ausgestaltung, vgl. auch den Pfeil 52.

In Fig. 11b ist der Pilotbohrer 24 zu einem gewissen Grad in das Werkstück 34 eingedrungen. Die Bohrkrone 18 kommt zur Anlage an das Werkstück 34. Die Bohrkrone 18 ist grundsätzlich unabhängig vom Pilotbohrer 24 relativ zur Werkzeugspindel 64a längsverschieblich auf dieser aufgenommen, vgl. einen mit 94a bezeichneten Pfeil in Fig. 11a. Die Bohrkrone 18 kann über Stößel 96a, 96b oder Ähnliches auf die Hülse 126 einwirken. Eine Längsverschiebung der Bohrkrone 18 in Richtung auf das Getriebe 42 bewirkt ebenso eine Längsverschiebung der Hülse 126. Alternativ kann die Bohrkrone 18 etwa mit der Hülse 126 einstückig ausgeführt sein.

In Fig. 11c ist der Pilotbohrer 24 gegenüber der in Fig. 11b gezeigten Stellung noch weiter in das Werkstück 34 eingedrungen. Die Bohrkrone 18 ist bereits ein Stück entlang der Werkzeugspindel 64a in Richtung auf einen Anschlag 120a verschoben. Ebenso ist die Hülse 126 verschoben. Die Anschlagelemente 124 sind jedoch in Fig. 11c weiterhin durch die Hülse 126 gesichert, so dass ein axiales Verschieben des Pilotbohrers 24 über die Anschlagelemente 124 gerade noch unterbunden wird. Die in Fig. 11c gezeigte Stellung kann ferner ein Schaltimpuls 122c bewirken, der etwa eine Verlagerung des Schaltelements 106d bewirkt, um die Schalteinrichtung 103c bzw. das Getriebe 42 zu schalten.

In Fig. 11d ist der Schaltvorgang abgeschlossen. Die Bohrmaschine 10c befindet sich in der Kernbohrkonfiguration. Das Getriebe 42 stellt die zweite Übertragungsstufe 48 bereit, vgl. den Pfeil 54.

Die Bohrkrone 18 hat die Hülse 126 gegen den Anschlag 120a verschoben. Somit können Vorschubkräfte auf die Bohrkrone 18 übertragen werden, die Bohrkrone 18 kann in das Werkstück 34 eindringen. Das Verschieben der Hülse 126 hat die Anschlagelemente 124 freigegeben. Diese sind ausgerückt, der Pilotbohrer 24 kann über die Anschlagelemente 124 hinaus gegen die Kraft des Federelementes 84a in die Werkzeugspindel 64a in Richtung auf das Getriebe 42 eintauchen, vgl. einen mit 94d bezeichneten Pfeil. Dabei ist der Pilotbohrer 24 im Wesentlichen von weiterem Eindringen in das Werkstück 34 ausgenommen. Somit kann die gesamte Antriebsleistung im Wesentlichen auf die Bohrkrone 18 übertragen werden.

In Fig. 12 ist beispielhaft ein Zustand dargestellt, bei dem eine Kernbohrung abgeschlossen wurde. Die Bohrkrone 18 hat das Werkstück 34 vollständig durchdrungen. Der Pilotbohrer 24 hat eine initiale Pilotbohrung 130 gesetzt, ist jedoch über diese hinaus nicht weiter in das Werkstück 34 eingedrungen. Die Bohrung hat einen Bohrkern 128 ergeben. Der Bohrkern 128 kann etwa durch eine Axialverschiebung des Pilotbohrers 24 relativ zur Werkzeugspindel 64a und zur Bohrkrone 18 aus dieser ausgeworfen werden. Die Verschiebung kann durch das Federelement 84a eingeleitet werden, vgl. auch Fig. 11 d. Gleichzeitig kann dabei die Bohrmaschine 10c von der Kernbohrkonfiguration erneut in die Zentrierbohrkonfiguration überführt werden.

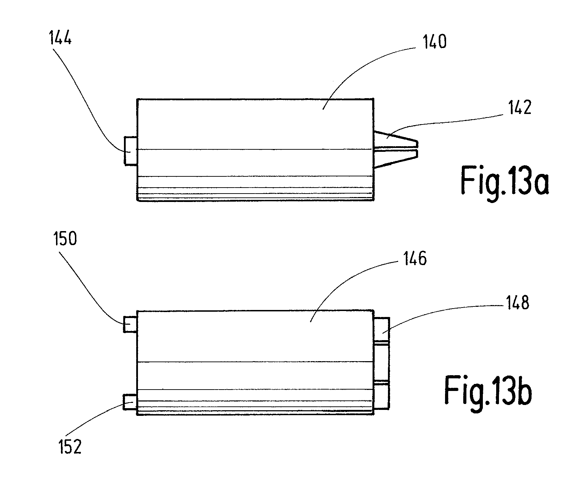

In Fig. 13 ist schließlich ein Adapter mit zwei Adapterstücken zum Spannen des Pilotbohrers 24 bzw. zum Spannen der Bohrkrone 18 gezeigt.

Fig. 13a zeigt ein erstes Adapterstück 140 mit einer ersten Bohreraufnahme 142 zum Spannen des Pilotbohrers 24, während Fig. 13b ein zweites Adapterstück 146 mit einer zweiten Bohreraufnahme 148 zum Spannen der Bohrkrone 18 zeigt. Je nachdem, ob das erste Adapterstück 140 mit dem Pilotbohrer 24 oder das zweite Adapterstück 146 mit der Bohrkrone 18 an der Werkzeugspindel 64 befestigt wird, wird entweder die erste Übersetzungsstufe 46 oder die zweite Übersetzungsstufe 48 aktiviert. Hierzu kann beispielsweise eine Erkennung an der Werkzeugspindel 64 vorgesehen sein, die über einen Formschluss mit einem Formschlusselement 144 am ersten Adapterstück 140 bzw. mit Formschlusselementen 150, 152 am zweiten Adapterstück 146 gesteuert wird.

## Patentansprüche

1. Bohrmaschine, insbesondere handgeführte Kernbohrmaschine, mit einem Antrieb (36) mit einem Motor (38), der mit einer Werkzeugspindel (64) zu deren Antrieb koppelbar ist, wobei der Antrieb (36) zumindest eine erste Übertragungsstufe (46) und eine zweite Übertragungsstufe (48) erlaubt, einer Zentrieraufnahme (78) zur Aufnahme eines Pilotbohrers (24) und mit einer Werkzeugaufnahme (76) zur Aufnahme einer Bohrkrone (18), wobei die Bohrkrone (18) und der Pilotbohrer (24) im Wesentlichen konzentrisch zueinander aufnehmbar sind, wobei der Pilotbohrer (24), insbesondere zum Bohren einer Pilotbohrung, mittels der ersten Übertragungsstufe (46) in einem ersten Drehzahlbereich antreibbar ist, und wobei die Bohrkrone (18), insbesondere zum Bohren einer Kernbohrung, mittels der zweiten Übertragungsstufe (48) in einem zweiten Drehzahlbereich antreibbar ist, **gekennzeichnet durch** eine Schalteinrichtung (103), die mit dem Antrieb (36) zusammenwirkt und dazu ausgebildet ist, den Antrieb (36) selektiv zumindest in einer Zentrierbohrkonfiguration oder einer Kernbohrkonfiguration zu betreiben, wobei bei der Zentrierbohrkonfiguration zumindest der Pilotbohrer (24) in der ersten Übertragungsstufe (46) antreibbar ist, und wobei bei der Kernbohrkonfiguration zumindest die Bohrkrone (18) in der zweiten Übertragungsstufe (48) antreibbar ist.

2. Bohrmaschine (10) nach Anspruch 1, **dadurch gekennzeichnet, dass** der Antrieb (36) ein Getriebe (42), insbesondere ein mechanisches Getriebe, aufweist, das dem Motor (38) und der Werkzeugspindel (64) zwischengeschaltet ist, und das in der ersten Übertragungsstufe (46) eine erste Übersetzung und in der zweiten Übertragungsstufe (48) eine zweite Übersetzung bereitstellt, wobei das Getriebe (42) vorzugsweise zumindest einen ersten Ausgang (47) und einen zweiten Ausgang (49) aufweist, die selektiv mit der Werkzeugspindel (64) zur Drehmitnahme koppelbar sind, wobei der erste Ausgang (47) der ersten Übertragungsstufe (46) zugeordnet ist und wobei der zweite Ausgang (49) der zweiten Übertragungsstufe (48) zugeordnet ist.

3. Bohrmaschine (10) nach Anspruch 2, **dadurch gekennzeichnet, dass** die Werkzeugspindel (64) einen ersten Spindelabschnitt (66) und einen zweiten Spindelabschnitt (68) aufweist, die zueinander verdrehbar sind, wobei der erste Spindelabschnitt (66) mit dem ersten Ausgang (47) und dem Pilotbohrer (24) koppelbar ist, und wobei der zweite Spindelabschnitt (68) mit dem zweiten Ausgang (49) und der Bohrkrone (18) koppelbar ist.

4. Bohrmaschine (10) nach einem der vorhergehenden Ansprüche, **dadurch gekennzeichnet, dass** die Schalteinrichtung (103) zumindest eine Kupplung (104) aufweist, die dazu ausgebildet ist, zumindest den Pilotbohrer (24) oder die Bohrkrone (18) zur selektiven Drehmitnahme mit der Werkzeugspindel (64) zu koppeln oder freizugeben.

5. Bohrmaschine (10) nach einem der vorhergehenden Ansprüche, **gekennzeichnet durch** eine Steuereinrichtung (56), die dazu ausgebildet ist, abhängig von Betriebszuständen der Bohrmaschine (10) den Antrieb (36) selektiv in die Zentrierbohrkonfiguration oder die Kernbohrkonfiguration zu überführen.

6. Bohrmaschine (10) nach Anspruch 5, **dadurch gekennzeichnet, dass** die Steuereinrichtung (56) mit zumindest einem Sensor (58, 60), insbesondere einem Kraftsensor, Wegsensor oder Anschlagdetektor, gekoppelt ist.

7. Bohrmaschine (10) nach einem der vorhergehenden Ansprüche, **dadurch gekennzeichnet, dass** zumindest der Pilotbohrer (24) oder die Bohrkrone (18) relativ zur Werkzeugspindel (64) längsverschieblich gelagert ist.

8. Bohrmaschine (10) nach Anspruch 7, **dadurch gekennzeichnet, dass** eine Relativverschiebung der Bohrkrone (18) gegenüber der Werkzeugspindel (64) zumindest eine Kupplung (118b) des Pilotbohrers (24) schaltet.

9. Bohrmaschine (10) nach Anspruch 7 oder 8, **dadurch gekennzeichnet, dass** in der Zentrierbohrkonfiguration zumindest ein Anschlagelement (124) für den Pilotbohrer (24) vorgesehen ist, das eine Längsverschiebung des Pilotbohrers (24) gegenüber der Werkzeugspindel (64) begrenzt.

10. Bohrmaschine (10) nach einem der Ansprüche 7 bis 9, **dadurch gekennzeichnet, dass** eine Längsverschiebung der Bohrkrone (18) gegenüber der Werkzeugspindel (64) das zumindest eine Anschlagelement (124) des Pilotbohrers (24) selektiv freigibt oder einrückt.

11. Bohrmaschine (10) nach einem der vorhergehenden Ansprüche, **dadurch gekennzeichnet, dass** zumindest ein Federelement (84, 102) vorgesehen ist, das eine Rückstellkraft erzeugt, die zumindest auf den Pilotbohrer (24) oder die Bohrkrone (18) in Richtung auf die Zentrierbohrkonfiguration einwirkt.

12. Bohrmaschine nach einem der vorhergehenden Ansprüche, **gekennzeichnet durch** einen Adapter, der zur Aufnahme an der Werkzeugspindel (64) ausgebildet ist und der eine erste Bohreraufnahme (142) zum Spannen des Pilotbohrers (24) aufweist, und eine zweite Bohreraufnahme (148) zum Spannen der Bohrkrone (18), aufweist, und der in Abhängigkeit von der Aktivierung der ersten Bohreraufnahme (142) beim Spannen des Pilotbohrers (24) die erste Übertragungsstufe (46) aktiviert und bei der Aktivierung der zweiten Bohreraufnahme (148) beim Spannen der Bohrkrone (18) die zweite Übertragungsstufe (48) aktiviert.

13. Bohrmaschine nach Anspruch 12, **dadurch gekennzeichnet, dass** der Adapter ein erstes Adapterstück (140) mit der ersten Bohreraufnahme (148) zum Spannen des Pilotbohrers (24) und ein zweites Adapterstück (146) mit der zweiten Bohreraufnahme(148) zum Spannen der Bohrkrone (18) aufweist, wobei die erste oder zweite Übertragungsstufe (46, 48) in Abhängigkeit davon aktiviert wird, welches Adapterstück (140, 146) an der Werkzeugspindel (64) befestigt ist.

14. Bohrmaschinen-Werkzeug-Kombination mit einer Bohrmaschine (10) nach einem der vorhergehenden Ansprüche, mit einem Werkzeug (17), das einen Pilotbohrer (24) und eine Bohrkrone (18) aufweist, wobei der Pilotbohrer (24) und die Bohrkrone (18) konzentrisch zueinander aufnehmbar sind, und wobei insbesondere der Pilotbohrer (24) an der Bohrkrone (18) aufgenommen ist, **dadurch gekennzeichnet, dass** der Pilotbohrer (24) und die Bohrkrone (18) selektiv rotatorisch antreibbar sind, wobei der Pilotbohrer (24), insbesondere zum Bohren einer Pilotbohrung, in einem ersten Drehzahlbereich antreibbar ist, wobei die Bohrkrone (18), insbesondere zum Bohren einer Kernbohrung, in einem zweiten Drehzahlbereich antreibbar ist, und wobei insbesondere zumindest der Pilotbohrer (24) oder die Bohrkrone (18) längsverschieblich auf der Werkzeugspindel (64) aufgenommen sind.

## Claims

1. A drilling machine, in particular a hand-held core drilling machine, comprising a drive (36) with a motor (38) that can be coupled to a tool spindle (64) for driving the latter, wherein the drive (36) allows at least a first transmission stage (46) and a second transmission stage (48), further comprising a center mount (78) for mounting a pilot drill (24) and a tool mount (76) for mounting a drill bit (18), wherein the drill bit (18) and the pilot drill (24) can be mounted substantially concentrically with one another, wherein the pilot drill (24), in particular in order to drill a pilot hole, can be driven in a first rotational speed range by means of the first transmission stage (46) and wherein the drill bit (18), in particular in order to drill a core hole, can be driven in a second rotational speed range by means of the second transmission stage (48), **characterized by** a switching device (103) which interacts with the drive (36) and is configured for operating the drive (36) selectively at least in a center drilling configuration or in a core drilling configuration, wherein, in the center drilling configuration, at least the pilot drill (24) can be driven in the first transmission stage (46), and wherein, in the core drilling configuration, at least the drill bit (18) can be driven in the second transmission stage (48).

2. The drilling machine (10) of claim 1, **characterized in that** the drive (36) has a gear mechanism (42), in particular a mechanical gear mechanism, which is connected between the motor (38) and the tool spindle (64) and which provides a first transmission ratio in the first transmission stage (46) and a second transmission ratio in the second transmission stage (48), wherein the gear mechanism (42) preferably has at least a first output (47) and a second output (49), which outputs can be coupled selectively to the tool spindle (64) in order to be driven in rotation, wherein the first output (47) is assigned to the first transmission stage (46) and wherein the second output (49) is assigned to the second transmission stage (48).

3. The drilling machine (10) of claim 2, **characterized in that** the tool spindle (64) has a first spindle section (66) and a second spindle section (68) which can be rotated with respect to one another, wherein the first spindle section (66) can be coupled to the first output (47) and the pilot drill (24) and wherein the second spindle section (68) can be coupled to the second output (49) and the drill bit (18).

4. The drilling machine (10) of any of the preceding claims, **characterized in that** the switching device (103) has at least one coupling (104), which is designed to couple at least the pilot drill (24) or the drill bit (18) to the tool spindle (64) so that they are driven selectively in rotation, or to disengage them.

5. The drilling machine (10) of any of the preceding claims, **characterized by** a control device (56) which is configured for converting the drive (36) selectively into the center drilling configuration or into the core drilling configuration, depending on operating states of the drilling machine (10).

6. The drilling machine (10) of claim 5, **characterized in that** the control device (56) is coupled to at least one sensor (58, 60), in particular a force sensor, travel sensor or impact detector.

7. The drilling machine (10) of any of the preceding claims, **characterized in that** at least the pilot drill (24) or the drill bit (18) is mounted in a longitudinally movable manner in relation to the tool spindle (64).

8. The drilling machine (10) of claim 7, **characterized in that** a relative movement of the drill bit (18) with respect to the tool spindle (64) switches at least one coupling (118b) of the pilot drill (24).

9. The drilling machine (10) of claim 7 or 8, **characterized in that** at least one stop element (124) for the pilot drill (24) in the center drilling configuration, said stop element (124) limiting a longitudinal movement of the pilot drill (24) with respect to the tool spindle (64).

10. The drilling machine (10) according to any of claims 7 to 9, **characterized in that** a longitudinal movement of the drill bit (18) with respect to the tool spindle (64) selectively disengages or engages the at least one stop element (124) of the pilot drill (24).

11. The drilling machine (10) of any of the preceding claims, **characterized in that** at least one spring element (84, 102) which generates a restoring force that acts at least on the pilot drill (24) or the drill bit (18) in the direction of the center drilling configuration.

12. The drilling machine of any of the preceding claims, **characterized by** an adapter which is configured to be mounted on the tool spindle (64) and which has a first drill mount (142) for chucking the pilot drill (24) and has a second drill mount (148) for chucking the drill bit (18), and which activates the first transmission stage (46) depending on the activation of the first drill mount (142) when the pilot drill (24) is chucked, and activates the second transmission stage (48) when the second drill mount (148) is activated when the drill bit (18) is chucked.

13. The drilling machine of claim 12, **characterized in that** the adapter comprises a first adapter piece (140) having the first drill mount (148) for chucking the pilot drill (24) and further comprises a second adapter piece (146) having the second drill mount (148) for chucking the drill bit (18), wherein the first or second transmission stage (46, 48) is activated depending on which adapter piece (140, 146) is fastened to the tool spindle (64).

14. A drilling machine-tool combination comprising a drilling machine (10) of any of the preceding claims, comprising a tool (17) which has a pilot drill (24) and a drill bit (18), wherein the pilot drill (24) and the drill bit (18) can be mounted concentrically with one another, **characterized in that** the pilot drill (24) is mounted on the drill bit (18), wherein the pilot drill (24) and the drill bit (18) can be driven selectively in rotation, wherein the pilot drill (24) can be driven in a first rotational speed range, in particular in order to drill a pilot hole, wherein the drill bit (18) can be driven in a second rotational speed range, in particular in order to drill a core hole, and wherein in particular at least the pilot drill (24) or the drill bit (18) are mounted in a longitudinally movable manner on the tool spindle (64).

## Revendications

1. Perceuse, en particulier perceuse de trépanage manuelle, comprenant un entraînement (36) pourvu d'un moteur (38), lequel entraînement peut être accouplé à une broche d'outil (64) en vue de son entraînement, l'entraînement (36) permettant au moins un premier étage de transmission (46) et un deuxième étage de transmission (48), comprenant un logement de centrage (78) destiné à recevoir un foret pilote (24) et comprenant un logement d'outil (76) destiné à recevoir une couronne de perçage (18), la couronne de perçage (18) et le foret pilote (24) pouvant être reçus d'une manière essentiellement concentrique l'un à l'autre, le foret pilote (24) pouvant, en particulier pour percer un alésage pilote, être entraîné au moyen du premier étage de transmission (46) dans une première plage de vitesses de rotation, et la couronne de perçage (18) pouvant, en particulier pour percer un carottage, être entraînée au moyen du deuxième étage de transmission (48) dans une deuxième plage de vitesses de rotation, **caractérisée par** un dispositif de commutation (103) qui coopère avec l'entraînement (36) et est conçu pour faire fonctionner de manière sélective l'entraînement (36) au moins dans une configuration de perçage de centrage ou une configuration de carottage, au moins le foret pilote (24) pouvant être entraîné dans le premier étage de transmission (46) dans le cas de la configuration de perçage de centrage, et au moins la couronne de perçage (18) pouvant être entraînée dans le deuxième étage de transmission (48) dans le cas de la configuration de carottage.

2. Perceuse (10) selon la revendication 1, **caractérisée en ce que** l'entraînement (36) comprend une transmission (42), en particulier une transmission mécanique, laquelle est interposée entre le moteur (38) et la broche d'outil (64), et laquelle produit un premier rapport de transmission dans le premier étage de transmission (46) et un deuxième rapport de transmission dans le deuxième étage de transmission (48), la transmission (42) comprenant de préférence au moins une première sortie (47) et une deuxième sortie (49), lesquelles peuvent être accouplées de manière sélective à la broche d'outil (64) en vue de l'entraînement en rotation, la première sortie (47) étant associée au premier étage de transmission (46) et la deuxième sortie (49) étant associée au deuxième étage de transmission (48).

3. Perceuse (10) selon la revendication 2, **caractérisée en ce que** la broche d'outil (64) comprend une première partie de broche (66) et une deuxième partie de broche (68), lesquelles peuvent tourner l'une par rapport à l'autre, la première partie de broche (66) pouvant être accouplée à la première sortie (47) et au foret pilote (24), et la deuxième partie de broche (68) pouvant être accouplée à la deuxième sortie (49) et à la couronne de perçage (18).

4. Perceuse (10) selon l'une quelconque des revendications précédentes, **caractérisée en ce que** le dispositif de commutation (103) comprend au moins un accouplement (104) qui, en vue de l'entraînement en rotation de manière sélective, est conçu pour accoupler au moins le foret pilote (24) ou la couronne de perçage (18) à la broche d'outil (64) ou pour les en libérer.

5. Perceuse (10) selon l'une quelconque des revendications précédentes, **caractérisée par** un dispositif de commande (56) qui est conçu pour, en fonction d'états de fonctionnement de la perceuse (10), faire passer de manière sélective l'entraînement (36) à la configuration de perçage de centrage ou à la configuration de carottage.

6. Perceuse (10) selon la revendication 5, **caractérisée en ce que** le dispositif de commande (56) est connecté à au moins un capteur (58, 60), en particulier à un capteur de force, un capteur de course ou un détecteur de butée.

7. Perceuse (10) selon l'une quelconque des revendications précédentes, **caractérisée en ce qu'**au moins le foret pilote (24) ou la couronne de perçage (18) est monté(e) de manière déplaçable longitudinalement par rapport à la broche d'outil (64).

8. Perceuse (10) selon la revendication 7, **caractérisée en ce qu'**un déplacement relatif de la couronne de perçage (18) par rapport à la broche d'outil (64) connecte au moins un accouplement (118b) du foret pilote (24).

9. Perceuse (10) selon la revendication 7 ou 8, **caractérisée en ce que**, dans la configuration de perçage de centrage, au moins un élément de butée (124) pour le foret pilote (24) est prévu, lequel limite un déplacement longitudinal du foret pilote (24) par rapport à la broche d'outil (64).

10. Perceuse (10) selon l'une quelconque des revendications 7 à 9, **caractérisée en ce qu'**un déplacement longitudinal de la couronne de perçage (18) par rapport à la broche d'outil (64) libère ou engage de manière sélective l'au moins un élément de butée (124) du foret pilote (24).

11. Perceuse (10) selon l'une quelconque des revendications précédentes, **caractérisée en ce qu'**au moins un élément ressort (84, 102) est prévu, lequel génère une force de rappel qui agit au moins sur le foret pilote (24) ou sur la couronne de perçage (18) en direction de la configuration de perçage de centrage.

12. Perceuse selon l'une quelconque des revendications précédentes, **caractérisée par** un adaptateur qui est conçu pour la réception sur la broche d'outil (64) et qui comprend un premier porte-outil (142) pour serrer le foret pilote (24), et un deuxième porte-outil (148) pour serrer la couronne de perçage (18) et qui, en fonction de l'activation du premier porte-outil (142) lors du serrage du foret pilote (24), active le premier étage de transmission (46) et qui, en cas d'activation du deuxième porte-outil (148) lors du serrage de la couronne de perçage (18), active le deuxième étage de transmission (48).

13. Perceuse selon la revendication 12, **caractérisée en ce que** l'adaptateur comprend une première pièce d'adaptateur (140) comprenant le premier porte-outil (148) pour serrer le foret pilote (24) et une deuxième pièce d'adaptateur (146) comprenant le deuxième porte-outil (148) pour serrer la couronne de perçage (18), le premier ou le deuxième étage de transmission (46, 48) étant activé en fonction de quelle pièce d'adaptateur (140, 146) est fixée à la broche d'outil (64).

14. Combinaison d'une perceuse et d'un outil, comprenant une perceuse (10) selon l'une quelconque des revendications précédentes, comprenant un outil (17) qui comprend un foret pilote (24) et une couronne de perçage (18), le foret pilote (24) et la couronne de perçage (18) pouvant être reçus de manière concentrique l'un à l'autre, et en particulier le foret pilote (24) étant reçu sur la couronne de perçage (18), **caractérisée en ce que** le foret pilote (24) et la couronne de perçage (18) peuvent être entraînés en rotation de manière sélective, le foret pilote (24) pouvant, en particulier pour percer un alésage pilote, être entraîné dans une première plage de vitesses de rotation, la couronne de perçage (18) pouvant, en particulier pour percer un carottage, être entraînée dans une deuxième plage de vitesses de rotation, et en particulier au moins le foret pilote (24) ou la couronne de perçage (18) étant reçu(e) de manière déplaçable longitudinalement sur la broche d'outil (64).
